# EUROPEAN PATENT SPECIFICATION

(11) **EP 4 330 923 B1**
(45) Date of publication and mention of the grant of the patent: **28.10.2026**
(21) Application number: 22918502.0
(22) Date of filing: 30.12.2022
(51) Int. Cl.: G06T 12/10, G06T 12/20

(54) **SYSTEMS AND METHODS FOR POSITRON EMISSION COMPUTED TOMOGRAPHY IMAGE RECONSTRUCTION**
SYSTEME UND VERFAHREN ZUR BILDREKONSTRUKTION DURCH POSITRONENEMISSIONSCOMPUTERTOMOGRAPHIE
SYSTÈMES ET PROCÉDÉS DE RECONSTRUCTION D'IMAGE DE TOMODENSITOMÉTRIE PAR ÉMISSION DE POSITRONS

(30) Priority: 05.01.2022 CN 202210009707; 05.01.2022 CN 202210010839
(43) Date of publication of application: 06.03.2024
(73) Proprietor: Shanghai United Imaging Healthcare Co., Ltd., Shanghai 201807 (CN)
(72) Inventor: XI, Chen, Shanghai 201807 (CN); YE, Qing, Shanghai 201807 (CN); XU, Hancong, Shanghai 201807 (CN); FENG, Tao, Houston, Texas 77054 (US); YANG, Gang, Shanghai 201807 (CN); ZHAO, Yizhang, Shanghai 201807 (CN)
(74) Representative: Wang, Bo
(86) International application number: PCT/CN2022/143709
(87) International publication number: WO 2023/131061

(56) References cited:
- CN-A- 109 658 472
- CN-A- 110 223 247
- CN-A- 110 866 959
- CN-A- 114 359 430
- CN-A- 114 359 431
- US-A1- 2014 003 689
- WHITELEY WILLIAM ET AL: "FastPET: Near Real-Time Reconstruction of PET Histo-Image Data Using a Neural Network", IEEE TRANSACTIONS ON RADIATION AND PLASMA MEDICAL SCIENCES, IEEE, vol. 5, no. 1, 2 October 2020 (2020-10-02), pages 65 - 77, XP011829041, ISSN: 2469-7311, [retrieved on 20201229], DOI: 10.1109/TRPMS.2020.3028364
- GUOBAO WANG ET AL: "Maximum a posteriori reconstruction of the Patlak parametric image from sinograms in dynamic PET; MAP reconstruction of the Patlak parametric image from sinograms", PHYSICS IN MEDICINE AND BIOLOGY, INSTITUTE OF PHYSICS PUBLISHING, BRISTOL GB, vol. 53, no. 3, 7 February 2008 (2008-02-07), pages 593 - 604, XP020127348, ISSN: 0031-9155
- TAO FENG ET AL: "Deep learning-based image reconstruction for TOF PET with DIRECT data partitioning format", PHYSICS IN MEDICINE AND BIOLOGY, INSTITUTE OF PHYSICS PUBLISHING, BRISTOL GB, vol. 66, no. 16, 9 August 2021 (2021-08-09), pages 165007, XP020368720, ISSN: 0031-9155, [retrieved on 20210809], DOI: 10.1088/1361-6560/AC13FE
- READER ANDREW J ET AL: "Deep Learning for PET Image Reconstruction", IEEE TRANSACTIONS ON RADIATION AND PLASMA MEDICAL SCIENCES, IEEE, vol. 5, no. 1, 6 August 2020 (2020-08-06), pages 1 - 25, XP011829063, ISSN: 2469-7311, [retrieved on 20201229], DOI: 10.1109/TRPMS.2020.3014786

## Description

### TECHNICAL FIELD

The present disclosure relates to a technical field of medical imaging, and in particular, to systems and methods for positron emission computed tomography (PET) image reconstruction.

### BACKGROUND

PET is an advanced functional molecular imaging technology which achieves tomographic imaging through the annihilation of positrons generated during a decay process of radionuclides and electrons in human tissues. Conventionally, PET image reconstruction requires a large amount of calculation and needs to occupy a large memory, resulting in low operation efficiency and a slow image reconstruction speed.

Therefore, it is desirable to provide systems and methods for PET image reconstruction that can improve the efficiency of image reconstruction.

Tao feng et al. "Deep learning-based image reconstruction for TOF PET with DIRECT data partitioning format", XP020368720 relates to deep learning-based image reconstruction for TOF PET with DIRECT data partitioning format.

Matej 2016, "Analytic TOF PET reconstruction algorithm within DIRECT data partitioning framework", relates to analytic TOF PET reconstruction algorithm within DIRECT data partitioning framework.

### SUMMARY

The invention is set out in the appended set of claims.

### BRIEF DESCRIPTION OF THE DRAWINGS

The present disclosure may be further described in terms of exemplary embodiments, which may be described in detail with reference to the drawings. These embodiments are non-limiting exemplary embodiments, in which like reference numerals represent similar structures, and wherein:
FIG. 1 is a schematic diagram of an exemplary imaging system according to some embodiments of the present disclosure;
FIG. 2 is a flowchart illustrating an exemplary process for generating one or more of a PET reconstruction image and a PET parametric image according to some embodiments of the present disclosure;
FIG. 3 is a schematic diagram illustrating an exemplary process for generating a PET reconstruction image according to some embodiments of the present disclosure;
FIG. 4 is a schematic diagram illustrating an exemplary process for generating a PET reconstruction image according to some embodiments of the present disclosure;
FIG. 5 is a schematic diagram illustrating another exemplary process for generating a PET reconstruction image according to some embodiments of the present disclosure;
FIG. 6 is a schematic diagram illustrating another exemplary process for generating a PET reconstruction image according to some embodiments of the present disclosure;
FIG. 7 is a schematic diagram illustrating another exemplary process for generating a PET reconstruction image according to some embodiments of the present disclosure;
FIG. 8 is a schematic diagram illustrating an exemplary process for obtaining a PET parametric image according to some embodiments of the present disclosure;
FIG. 9 is a schematic diagram illustrating an exemplary process for obtaining a motion-corrected PET reconstruction image according to some embodiments of the present disclosure;
FIG. 10 is a schematic diagram illustrating an exemplary process for generating a PET parametric image through an iterative process according to some embodiments of the present disclosure;
FIG. 11 is a flowchart illustrating an exemplary process for determining an iterative input function according to some embodiments of the present disclosure;
FIG. 12 is a schematic diagram illustrating an exemplary process for correcting an iterative input function according to some embodiments of the present disclosure;
FIG. 13 is a schematic diagram illustrating an exemplary process for correcting an initial iterative input function based on a population input function according to some embodiments of the present disclosure; and
FIG. 14 is a block diagram illustrating an exemplary processing device according to some embodiments of the present disclosure.

### DETAILED DESCRIPTION

In the following detailed description, numerous specific details are set forth by way of examples in order to provide a thorough understanding of the relevant disclosure. Obviously, the drawings described below are only some examples or embodiments of the present disclosure. Those skilled in the art, without further creative efforts, may apply the present disclosure to other similar scenarios according to these drawings. It should be understood that the purposes of these illustrated embodiments are only provided to those skilled in the art to practice the application, and are not intended to limit the scope of the present disclosure. Unless obviously obtained from the context or the context illustrates otherwise, the same numeral in the drawings refers to the same structure or operation.

It will be understood that the terms "system," "engine," "unit," "module," and/or "block" used herein are one method to distinguish different components, elements, parts, sections, or assemblies of different levels in ascending order. However, the terms may be displaced by other expressions if they may achieve the same purpose.

The terminology used herein is for the purposes of describing particular examples and embodiments only and is not intended to be limiting. As used herein, the singular forms "a," "an," and "the" may be intended to include the plural forms as well unless the context clearly indicates otherwise. It will be further understood that the terms "include" and/or "comprise," when used in this disclosure, specify the presence of integers, devices, behaviors, stated features, steps, elements, operations, and/or components but do not exclude the presence or addition of one or more other integers, devices, behaviors, features, steps, elements, operations, components, and/or groups thereof.

The flowcharts used in the present disclosure illustrate operations that systems implement according to some embodiments of the present disclosure. It is to be expressly understood the operations of the flowcharts may not be implemented in order. Conversely, the operations may be implemented in an inverted order or simultaneously. Moreover, one or more other operations may be added to the flowcharts. One or more operations may be removed from the flowcharts.

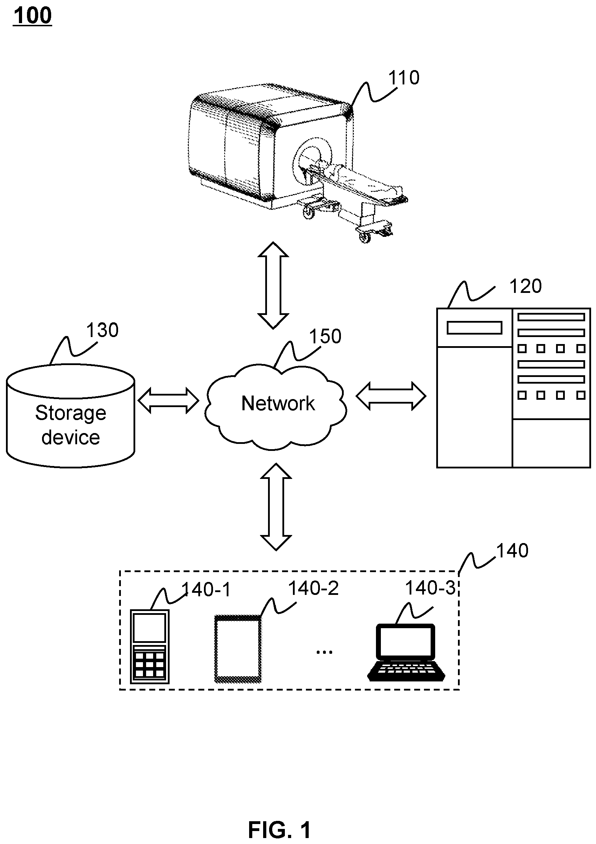

FIG. 1 is a schematic diagram of an imaging system 100 according to some embodiments of the present disclosure. In some embodiments, the imaging system 100 may realize a PET image reconstruction by implementing methods and/or processes disclosed in the present disclosure.

As shown in FIG. 1, the imaging system 100 may include an imaging device 110, a processing device 120, a storage device 130, a terminal 140, and a network 150. Various components in the imaging system 100 may be connected in various ways.

The imaging device 110 may be used to obtain scanning data (e.g., original PET data) of a scanned object. The scanned object may be biological or non-biological. For example, the scanned object may be a patient, an artificial object, an experimental object, etc. As another example, the scanned object may include a specific part, an organ, and/or a tissue of a patient. For example, the scanned object may include the head, the neck, the chest, the heart, the stomach, blood vessels, soft tissues, tumors, nodules, or the like, or any combination thereof.

In some embodiments, the imaging device 110 may include a PET imaging device, a PET-CT (Positron Emission Tomography-Computed Tomography) imaging device, a PET-MRI (Positron Emission Tomography-Magnetic Resonance Imaging) imaging device, or the like, which may be not limited herein.

The processing device 120 may process data and/or information obtained from the imaging device 110, the storage device 130, and/or the terminal 140. For example, the processing device 120 may determine correction data based on original PET data; determine reconstruction data based on the correction data; and generate one or more of a PET reconstruction image and a PET parametric image based on the reconstruction data. As another example, the processing device 120 may generate a PET parametric image based on the original PET data obtained by the imaging device 110. As another example, the processing device 120 may correct an iterative input function during a reconstruction process. In some embodiments, the processing device 120 may be a single server or a group of servers.

The storage device 130 may store data, instructions, and/or any other information. In some embodiments, the storage device 130 may be connected to the network 150 to realize communication with one or more components in the imaging system 100 (e.g., the processing device 120, the terminal 140, etc.). The one or more components in the imaging system 100 may read data or instructions stored in the storage device 130 through the network 150.

The terminal 140 may realize an interaction between a user and other components in the imaging system 100. For example, the user may input a scanning and reconstruction instruction or receive a reconstruction result through the terminal 140. Exemplary terminals may include a mobile device 140-1, a tablet computer 140-2, a laptop computer 140-3, or the like, or any combination thereof. In some embodiments, the terminal 140 may be integrated into the processing device 120 or the imaging device 110) (e.g., as an operating console of the imaging device 110). For example, a user (e.g., a doctor) may control the imaging device 110 to obtain scanning data of an object to be scanned through the operating console.

The network 150 may include any suitable network capable of facilitating an exchange of information and/or data in the imaging system 100. In some embodiments, the one or more components of the imaging system 100 (for example, the imaging device 110, the processing device 120, the storage device 130, the terminal 140, etc.) may exchange information and/or data with one or more other components of the imaging system 100 via the network 150.

It should be noted that the above descriptions of the imaging system 100 may be provided for purposes of illustration only and may not be intended to limit the scope of the present disclosure. For those skilled in the art, many changes and modifications can be made under the guidance of the present disclosure. For example, the assembly and/or functionality of the imaging system 100 may be varied or altered depending on particular implementation plans. Merely by way of example, some other components may be added to the imaging system 100, for example, a power module that may provide power to the one or more components of the imaging system 100.

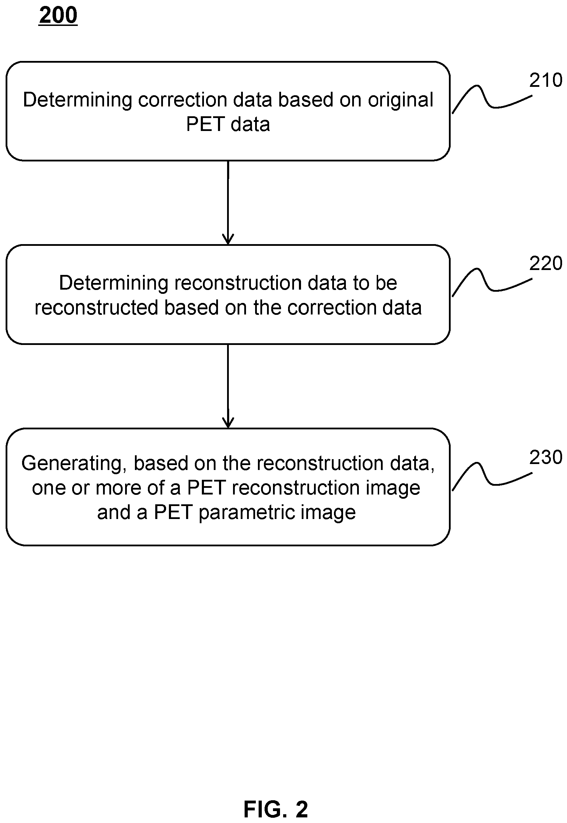

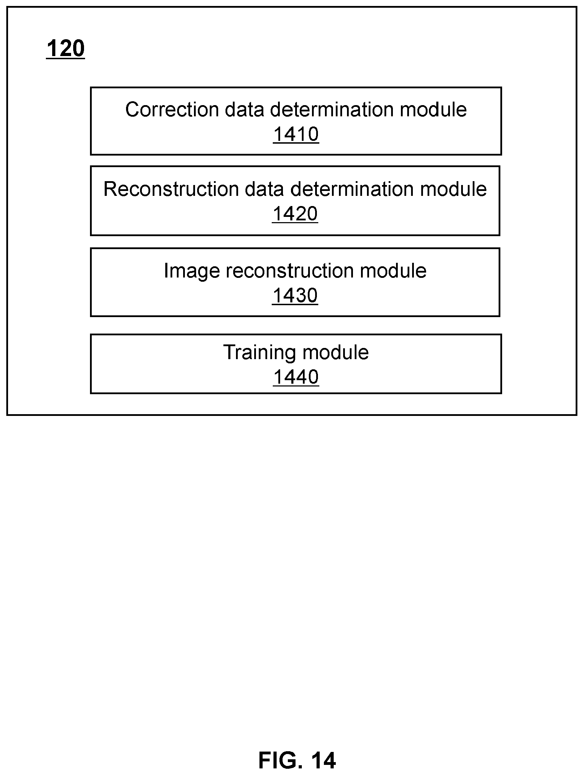

FIG. 2 is a flowchart illustrating an exemplary process 200 for generating one or more of a PET reconstruction image and a PET parametric image according to some embodiments of the present disclosure. The process 200 may be implemented in the imaging system 100 illustrated in FIG. 1. For example, the process 200 may be stored in the storage device 130 in the form of instructions (e.g., an application) and invoked and/or executed by the processing device 120 (e.g., one or more modules in the processing device 120 are illustrated in FIG. 14). As shown in FIG. 2, the process 200 may include the following operations.

In 210, correction data is determined based on original PET data. In some embodiments, the operation 210 may be performed by a correction data determination module 1410 of the processing device 120.

The original PET data may refer to original data collected by performing a PET scan on a scanned object using an imaging device (such as a PET scanner, a PET/CT scanner). In some embodiments, the original PET data may include PET data obtained based on a plurality of projection angles. For example, the projection angles may include angles perpendicular to a sagittal plane, a coronal plane, or a horizontal plane of the scanned object. In some embodiments, the original PET data may include projection data of different projection angles corresponding to a specific time point or a specific time interval.

In some embodiments, the original PET data may be dynamic original PET data, which includes a plurality of sets (or frames) of original data. It is understandable that a PET scan may last for a period of time, a plurality of sets of data corresponding to several time points or time periods may be collected, and a set of scanning data collected in each time period may be called a set (or frame) of original data.

In some embodiments, the original PET data may be data in a list format or a sinogram format. For example, a coordinate of each data in the original PET data in the sinogram format may be (*s, φ, ζ, θ, τ*), where (*s*, *φ, ζ*) denotes a sinogram coordinate, *θ* denotes an accept angle, and *τ* denotes a TOF (Time of flight) coordinate.

In some embodiments, the processing device 120 may obtain the original PET data from the imaging device. Alternatively, the original PET data may be stored in a storage device (such as the storage device 130), and the processing device 120 may obtain the original PET data from the storage device.

In some embodiments, the PET scan may be affected by various factors (such as random events, scattering events, etc.), so the original PET data may need to be corrected. The correction data may refer to data used to correct the original PET data, which may reduce or eliminate errors caused by the factors in the obtaining process of the original PET data.

In some embodiments, the correction data may include data with a TOF histo-image format. In some embodiments, the correction data includes one or more of an attenuation map, scatter correction data, and random correction data. The attenuation map may be used to reduce or eliminate an influence of body attenuation on the original PET data. The scatter correction data may reduce or eliminate an influence of scatter events on the original PET data. The random correction data may reduce or eliminate an influence of random events on the original PET data. In some embodiments, the correction data may also include other data that may correct errors in the original PET data.

In some embodiments, the processing device 120 may determine the correction data by different methods. For example, the processing device 120 may use various estimation methods to estimate an error amount (such as an offset amount) of the original PET data and determine the correction data based on the error amount. As another example, the processing device 120 may determine the attenuation map by assigning a corresponding attenuation coefficient to each voxel in the original PET data based on prior information. As another example, the processing device 120 may determine the scatter correction data based on the original PET data using a scatter estimation method (e.g., Monte Carlo simulation algorithm). As another example, the processing device 120 may determine the random correction data based on the original PET data by using a random correction method (e.g., a random window method).

In some embodiments, the processing device 120 may determine the correction data based on at least two types of data among the attenuation map, scatter correction data, and random correction data, and weight values corresponding to the at least two types of data. For the convenience of description, the attenuation map, the scatter correction data, and the random correction data may be referred to as a correction data subset. The weight of a correction data subset may reflect the importance of the corresponding type of correction data. For example, the correction data may be a weighted sum of the at least two types of data among the attenuation map, the scatter correction data, and the random correction data.

In some embodiments, the weight value of a correction data subset may be determined by a user or the processing device 120. For example, the weight value of each correction data subset may be determined based on a processing result, which may be generated by a weight prediction model based on environmental parameters. The weight prediction model may be a trained machine learning model. For example, the weight prediction model may include a deep neural network (DNN) model, a convolutional neural network (CNN) model, a recurrent neural network (RNN) model, a neural network (NN) model, or the like, or any combination thereof.

In some embodiments, an input of the weight prediction model may be the environmental parameter(s), and an output of the weight prediction model may be the weight value of each correction data subset. For example, the environmental parameter(s) may include parameter(s) related to a PET scanning device, parameter(s) related to a tracer, and parameter(s) related to a scanned object. The parameter(s) related to a PET scanning device may include a detector size of the PET scanning device, a coincidence time resolution, a time window, or the like. The detector size and the coincidence time resolution may affect a count of random coincidence events, and the time window may affect a sensitivity degree of the PET scanning device to scattered rays (i.e., a count of scattering events). The parameter(s) related to a tracer may include a tracer dose, a tracer concentration, etc. The parameter(s) related to a scanned object may include whether the scanned object takes a contrast agent, whether a pacemaker or other substances of different densities are built in, a blood sugar level of the scanned object, an insulin level of the scanned object, etc.

In some embodiments, the weight prediction model may be generated using second training samples with labels. The training of the weight prediction model may be performed by a training module 1440. The second training samples may include sample environmental parameter(s), and the labels of the second training samples may include a ground truth weight value of each sample correction data subset. The ground truth weight value of a sample correction data subset may be determined by a user or the processing device 120. For example, the sample correction data subset and corresponding sample PET data may be used to reconstruct a sample PET image, and the ground truth weight value of the sample correction data subset may be determined based on the quality of the sample PET image. The higher the quality of the sample PET image, the larger the ground truth weight value may be.

By determining the weight values corresponding to various types of the correction data based on the environmental parameter(s) and then determining the final correction data, the correction data can better reflect the influence of the environment, thereby improving the accuracy of subsequent PET image reconstruction.

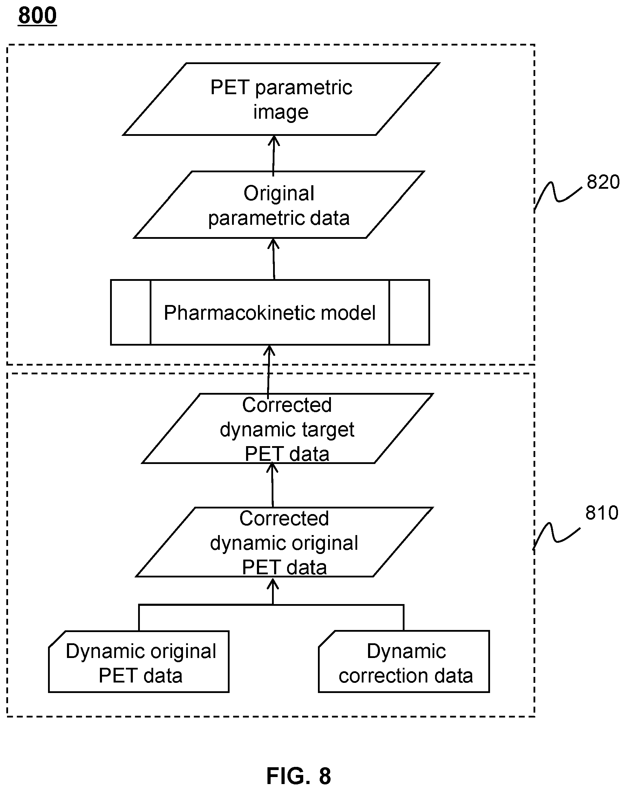

In some embodiments, the correction data may also include dynamic correction data, which will be described in detail in connection with FIG. 8.

In 220, reconstruction data to be reconstructed is determined based on the correction data. In some embodiments, the operation 210 may be performed by a reconstruction data determination module 1420 of the processing device 120.

The reconstruction data may include any data required for reconstruction. The reconstruction may refer to a process of processing data in one format to generate data in another format, for example, a process of reconstructing scanning data (such as the original PET data) into image data in an image domain.

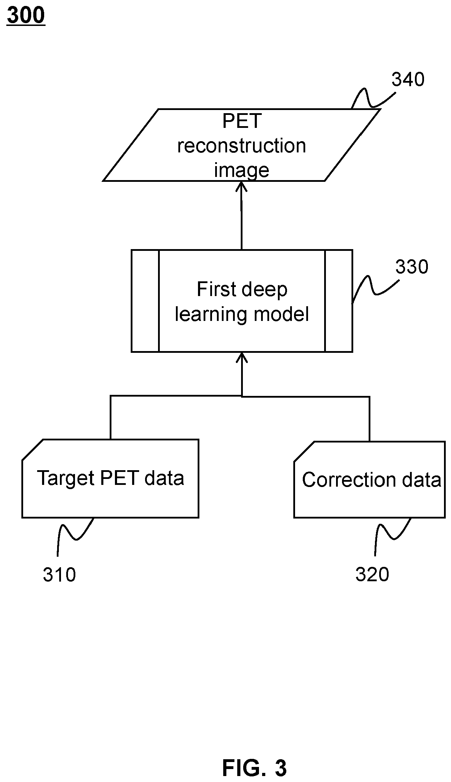

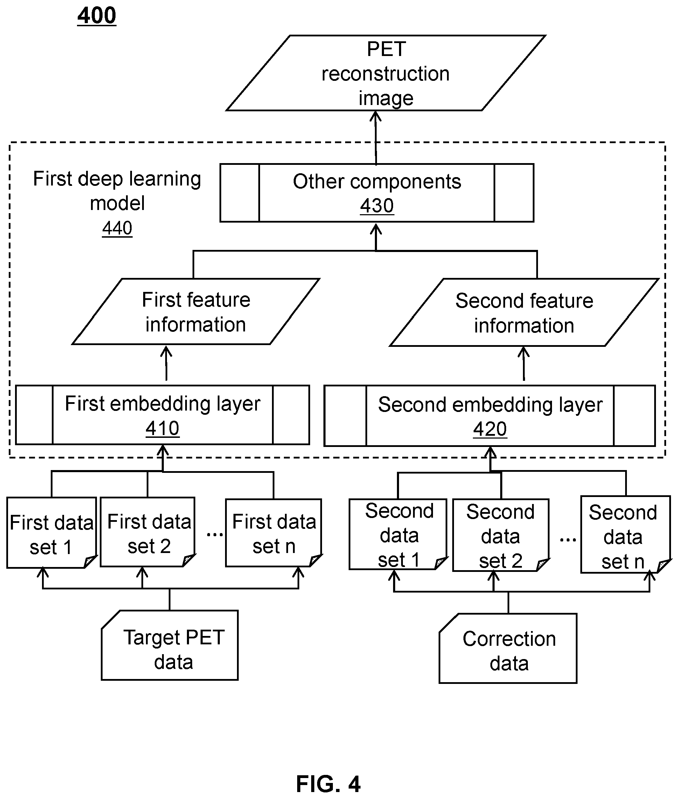

In some embodiments, the reconstruction data may include the correction data. In some embodiments, the reconstruction data may include target PET data generated based on the original PET data. The target PET data may refer to PET data having a TOF (Time of flight) histo-image format. For more descriptions about the target PET data, please refer to related descriptions of FIGs. 3 and 4. In some embodiments, the reconstruction data may include feature data (e.g., feature vectors or feature matrices), which may be obtained by performing feature extraction on the original PET data and the correction data. For example, an embedding layer may be configured to perform the feature extraction on the original PET data and the correction data to extract corresponding feature information. The extraction of the feature information using the embedding layer may be performed in a similar manner to the extraction of the first feature information and second feature information using a first embedding layer and a second embedding layer, which will be described in FIG. 4.

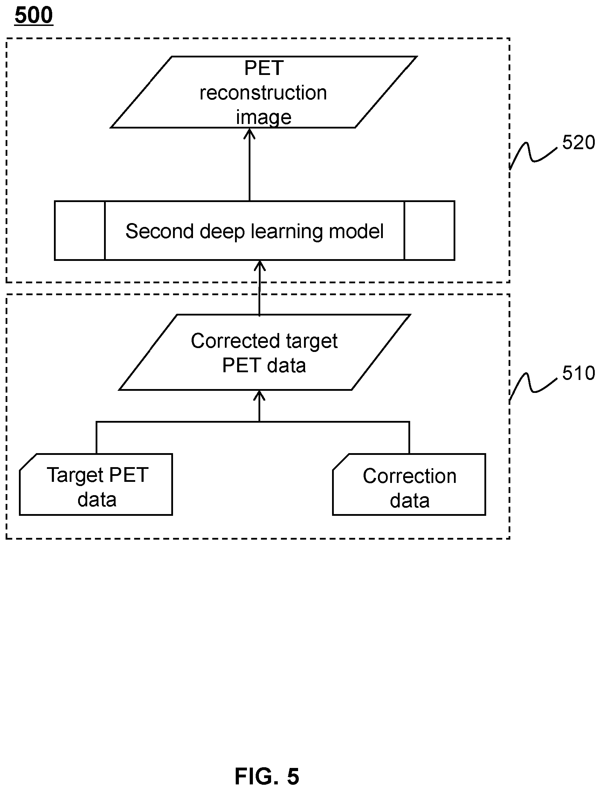

In some embodiments, the reconstruction data may include corrected target PET data obtained after correcting the target PET data based on the correction data. For more descriptions of the corrected target PET data, please refer to related descriptions in FIG. 5.

In some embodiments, the original PET data may include dynamic original PET data, the correction data may include dynamic correction data, and the reconstruction data may include corrected dynamic target PET data obtained based on the dynamic original PET data and the dynamic correction data. In some embodiments, the reconstruction data may include original parametric data obtained by processing the corrected dynamic PET data based on a pharmacokinetic model. For more descriptions of the corrected dynamic target PET data, the pharmacokinetic model, and the original parametric data, please refer to related descriptions in FIG. 8.

In 230, one or more of a PET reconstruction image and a PET parametric image may be generated based on the reconstruction data. In some embodiments, the operation 230 may be performed by an image reconstruction module 1430 of the processing device 120.

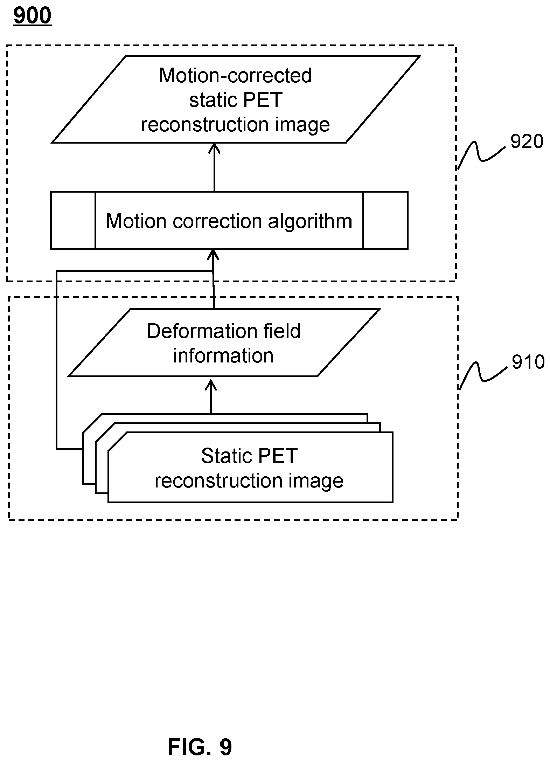

The PET reconstruction image may refer to an image that may reflect an internal structure of the scanned object. For example, the PET reconstruction image may be used to identify one or more diseased organs and/or adjacent organs. The PET reconstruction image may also be referred to as a functional image. In some embodiments, the PET reconstruction image may be a two-dimensional image or a three-dimensional image. In some embodiments, the PET reconstruction image may include one or more static PET reconstruction images, and each of the one or more static PET reconstruction images may correspond to a single time point or time period. For more descriptions of the static PET reconstruction image, please refer to related content in FIG. 9.

The PET parametric image may correspond to a specific parameter. For example, the PET parametric image may correspond to a pharmacokinetic parameter, such as a local blood flow, a metabolic rate, a substance transport rate, etc. In some embodiments, the PET parametric image may be a two-dimensional or a three-dimensional image, wherein the value of each pixel or voxel in the PET parametric image may reflect a parameter value of a corresponding physical point of the scanned object.

In some embodiments, the processing device 120 may generate a PET reconstruction image based on the reconstruction data through various reconstruction algorithms (such as an ML-EM (Maximum Likelihood-Expectation Maximization) algorithm). In some embodiments, the processing device 120 may generate the PET reconstruction image using a first deep learning model based on the target PET data and the correction data, which will be described in detail in connection with FIG. 3.

In some embodiments, the processing device 120 may use a pharmacokinetic model to process the corrected dynamic target PET data to obtain the original parametric data and generate the PET parametric image based on the original parametric data, which will be described in detail in connection with FIG. 8.

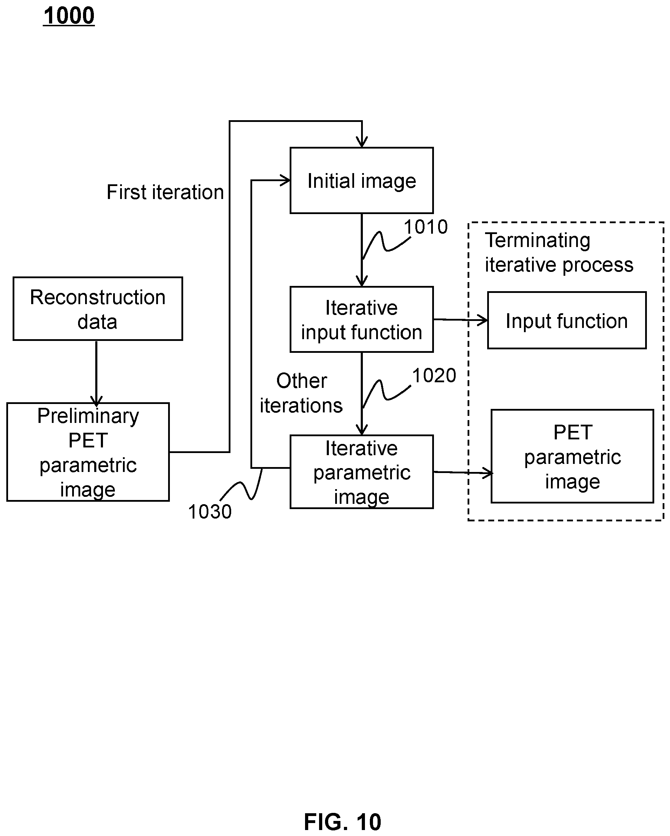

In some embodiments, the processing device 120 may generate a preliminary PET parametric image based on the reconstruction data; and further generate the PET parametric image through an iterative process, which will be described in detail in connection with FIG. 10.

In some embodiments, the processing device 120 may simultaneously generate the PET reconstruction image and the PET parametric image based on the reconstruction data through a combination of the multiple methods disclosed above.

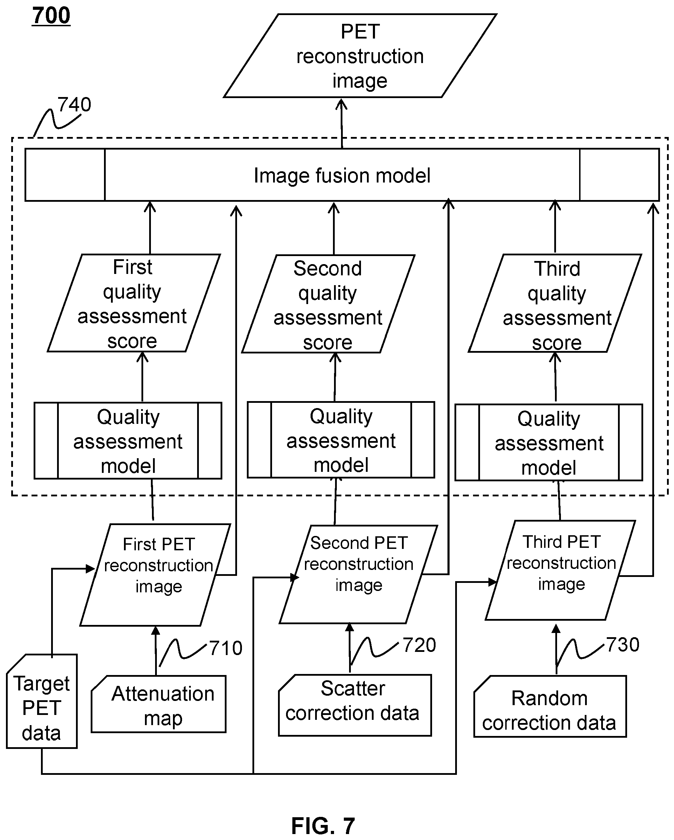

In some embodiments, the reconstruction data may include the target PET data and the correction data, and the correction data may include an attenuation map, scatter correction data, and random correction data. The processing device 120 may generate a first PET reconstruction image based on the attenuation map and the target PET data; generate a second PET reconstruction image based on the scatter correction data and the target PET data; generate a third PET reconstruction image based on the random correction data and the target PET data; and generate the PET reconstruction image by processing the first, second, and third PET reconstruction images using an image fusion model, the image fusion model being a trained machine learning model. For more descriptions of determining the PET reconstruction image based on the image fusion model, please refer to related descriptions in FIG. 7.

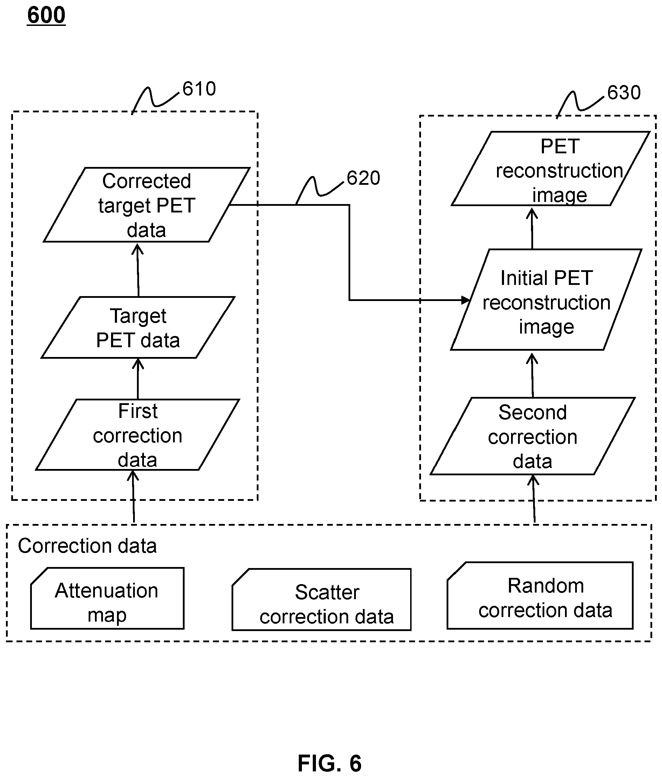

In some embodiments, the correction data may include first correction data and second correction data, and the processing device 120 may obtain the corrected target PET data by correcting the target PET data based on the first correction data; generate an initial PET reconstruction image based on the corrected target PET data; and generate the PET reconstruction image by correcting the initial PET reconstruction image based on the second correction data. For descriptions of generating the PET reconstruction image based on the first and second correction data, please refer to the related descriptions in FIG. 6.

Conventionally, image reconstruction is performed based on the original PET data that has the list mode format or the sinogram format. The original PET data having the list mode format usually has a large size, which is not suitable for deep learning-based reconstruction methods. The original PET data having the sinogram format may need to be processed by random transformation, and the transformed PET data can be reconstructed using a deep learning model having a fully connected layer. However, the fully connected layer has a large number of model parameters, and the training and application of the deep learning model having the fully connected layer require a lot of computing resources and time.

According to some embodiments of the present disclosure, correction data that includes target PET data having the TOF histo-image format may be determined and used to generate the PET reconstruction image and/or the PET parametric image. The target PET data having the TOF histo-image format can be processed using a DIRECT reconstruction method like MLIEM reconstruction methods. The DIRECT reconstruction method may perform convolution operations to achieve forward projection and backward projection, and can be implemented using models only including convolutional layers (e.g., a CNN model, a GAN model). Accordingly, the PET reconstruction methods disclosed herein can obviate the need for radon transformation or using a deep learning model having a fully connected layer, have a higher reconstruction efficiency and require fewer reconstruction resources.

FIG. 3 is a schematic diagram illustrating an exemplary process 300 for generating a PET reconstruction image according to some embodiments of the present disclosure. In some embodiments, operation 230 of FIG. 2 may be achieved by performing the process 300. In some embodiments, the process 300 may be performed by the image reconstruction module 1430 of the processing device 120.

As shown in FIG. 3, the reconstruction data may include target PET data 310 generated based on the original PET data and may also include correction data 320.

The target PET data 310 may refer to PET data having a TOF histo-image format. As described in FIG. 2, the original PET data may have a sinogram format or a list mode format, and the processing device 120 may convert the original PET data into data in the TOF (Time of flight) histo-image format to determine the target PET data. In the target PET data, the coordinate of each data point is (x, y, z, φ, θ), where x, y, z denote the coordinates of the data point in a three-dimensional coordinate system, φ and θ correspond to the projection angle and the accept angle respectively.

In some embodiments, the original PET data may include a plurality of sets of original PET data obtained based on a plurality of projection angles. The processing device 120 may obtain a plurality of sets of target PET data corresponding to the plurality of projection angles by converting the sets of original PET data into data in the TOF histo-image format.

In some embodiments, as shown in FIG. 3, the processing device 120 may generate the PET reconstruction image 340 by processing the target PET data 310 and the correction data 320 using a first deep learning model 330. For example, the processing device 120 may input the target PET data 310 and the correction data 320 into the first deep learning model 330, which may output the PET reconstruction image 340.

The first deep learning model 330 may refer to a model for realizing the reconstruction of PET images based on the target PET data and the correction data. In some embodiments, the first deep learning model 330 may be a trained machine learning model. For example, the first deep learning model 330 may be a convolutional neural network (CNN) model (such as an Unet model), a generative adversarial network (GAN) model, or other models that can perform image reconstruction. The training of the first deep learning model 330 may be performed by a training module 1440.

In some embodiments, the first deep learning model 330 may be generated based on a plurality of first training samples with labels. For example, the plurality of first training samples may be input into an initial first deep learning model, a value of a loss function may be determined based on the labels and prediction results output by the initial first deep learning model, and parameters of the initial first deep learning model may be iteratively updated based on the value of the loss function. When a preset condition is satisfied, the training may be completed, and the trained first deep learning model 330 may be obtained. The preset condition may be that the loss function converges, the count of iterations reaches a threshold, or the like. In some embodiments, the first training samples may include sample target PET data and sample correction data. The labels may include a ground truth PET reconstruction image, e.g., a PET reconstruction image that has undergone scatter correction, attenuation correction, and/or random correction. In some embodiments, the first training samples and labels thereof may be obtained based on historical scanning data.

In some embodiments, the processing device 120 may combine the target PET data 310 and the correction data 320 in a certain form (such as by concatenation) and then input the combined target PET data 310 and the correction data 320 into the first deep learning model 330, or input the target PET data 310 and the correction data 320 into the first deep learning model 330 respectively. For example, the processing device 120 may concatenate the target PET data 310 and the correction data 320 to generate concatenated data, and then input the concatenated data into the first deep learning model 330. Merely by way of example, the target PET data 310 and the correction data 320 may be stored in a same data format, and then one or more dimensions of the target PET data 310 and the correction data 320 may be used as a benchmark to concatenate other dimensions of the target PET data 310 and the correction data 320. Assuming that both the target PET data 310 and the correction data 320 are stored in a data format of (x, y, z), and the concatenation is performed based on the x and y axes, the coordinates of the target PET data 310 may be processed in advance into (x, y, y, z1), and the coordinates of the correction data 320 may be processed into (x, y, z2), then the coordinates of the concatenated data may be expressed as (x, y, z1+z2).

In some embodiments, the processing device 120 may perform a preprocessing operation on the target PET data 310 and the correction data 320, and then input the preprocessed target PET data and the preprocessed correction data into the first deep learning model. The preprocessing operation may include data splitting, feature extraction, data concatenation, or the like. For example, feature extraction may be performed on the target PET data 310 and the correction data 320, respectively, and the extracted feature information (e.g., in a form of a feature vector or a feature matrix) may be input into the first deep learning model 330. As another example, the target PET data 310 may be split into a plurality of first data sets, the correction data 320 may be split into a plurality of second data sets, and then the plurality of first data sets and the plurality of second data sets may be concatenated to generate a plurality of sets of concatenated data. Then, the plurality of sets of concatenated data may be input into the first deep learning model 330. For more descriptions of the preprocessing operation, please refer to the related content in FIG. 4.

FIG. 4 is a schematic diagram illustrating an exemplary process 400 for generating a PET reconstruction image according to some embodiments of the present disclosure. In some embodiments, the process 400 may be performed by the image reconstruction module 1430 of the processing device 120.

As shown in FIG. 4, the processing device 120 may split the target PET data into a plurality of first data sets (first data sets 1-n) and split the correction data into a plurality of second data sets (second data sets 1-n). The processing device 120 may further input the first data sets and the second data sets into a first deep learning model 440, and the first deep learning model 440 may output a PET reconstruction image. The first deep learning model 440 may be an exemplary embodiment of the first deep learning model 330 described in FIG. 3.

In some embodiments, the splitting of the target PET data may be performed based on a first preset splitting rule. The first preset splitting rule may define the data and/or size of the first data sets. For example, the first preset splitting rule may specify that the target PET data should be split into a plurality of first data sets with a specific size. Assuming the target PET data is 4D data (X*Y*Z*N), the first data sets may be (X1*Y1*Z1*N), where X1<=X, Y1<=Y, Z1<=Z, X1> the width of TOF kernel, Y1> the width of TOF kernel, and the sizes of X1, Y1, and Z1 do not exceed a memory limit.

The splitting of the correction data may be performed based on a second preset splitting rule. The second preset splitting rule may define the data and/or size of the second data sets. Assuming that the correction data is 4D data (X*Y*Z*M), the second data sets may be (X1*Y1*Z1*M), where X1<=X, Y1<=Y, Z1<=Z, X1 > the width of TOF kernel, Y1> the width of TOF kernel, and the sizes of X1, Y1, and Z1 do not exceed the memory limit. Different values of M may correspond to different correction data. For example, the value of M may be M1, M2, or M3, where M1 indicates that the current correction data is an attenuation map, M2 indicates that the current correction data is scatter correction data, and M3 indicates that the current correction data is random correction data.

In some embodiments, to facilitate data splitting and data concatenation, a preprocessing may be performed on the target PET data and/or correction data, such as dimension reduction processing. In some embodiments, downsampling and dimension reduction may be performed on the target PET data and/or the correction data. In some embodiments, after the dimension reduction processing, the coordinates of the data points of the target PET data may be changed from (x, y, z, φ, θ) to (x, y, z, N), and N may be obtained by performing dimension reduction processing on φ*θ; and the coordinates of the data points of the correction data may be changed from (x, y, z, φ', θ') to (x, y, z, M), and M may be obtained by performing dimension reduction processing on φ'*θ'.

Referring again to FIG. 4, the first deep learning model 440 may include a first embedding layer 410, a second embedding layer 420, and other components 430. The processing device 120 may use the first embedding layer 410 to process the plurality of first data sets to obtain the first feature information; use the second embedding layer 420 to process the plurality of second data sets to obtain the second feature information; and use the other components to process the first feature information and the second feature information to generate the PET reconstruction image.

The first embedding layer 410 and the second embedding layer 420 may be any neural network components capable of feature extraction and processing. For example, the first embedding layer 410 and the second embedding layer 420 may include convolutional layers, pooling layers, fully connected layers, or the like, or any combination thereof. The first feature information and the second feature information may include color features, texture features, depth features, or the like, or any combination thereof. The other components 430 may include any neural network components, such as convolutional layers, pooling layers, fully connected layers, skip connections, residual networks, normalization layers, or the like, or any combination thereof.

In some embodiments, an initial first deep learning model may be trained based on a plurality of third training samples with labels to obtain a trained first deep learning model 440. Each third training sample may include a plurality of sample first data sets and a plurality of sample second data sets. The sample first data sets may be obtained by splitting sample target PET data, and the sample second data sets may be obtained by splitting sample correction data. The label of the third training sample may include a ground truth PET reconstruction image. The training of the first deep learning model 440 may be performed by the training module 1440.

During training, the plurality of sample first data sets and the plurality of sample second data sets of each third training sample may be input into an initial first embedding layer and initial second embedding layer, respectively, to obtain sample first feature information output by the initial first embedding layer and sample second feature information output by the initial second embedding layer. Then, the sample first feature information and the sample second feature information may be input into the other components of the initial first deep learning model to obtain a predicted PET reconstruction image. The value of a loss function may be determined based on the ground truth PET reconstruction image and the predicted PET reconstruction image of each third training sample, and the parameters of the initial first deep learning model may be updated based on the value of the loss function. When a preset condition is satisfied, the model training may be completed, and the trained first deep learning model 440 may be obtained. The preset condition may be that the loss function converges, the count of iterations reaches a threshold, or the like.

It should be noted that the above descriptions about the processes 300 and 400 are only for illustration purposes, and those skilled in the art may make any reasonable modifications. For example, the first deep learning model 440 may be a CNN model (such as an Unet model) or a GAN model. After obtaining the first data sets (X1*Y1*Z1*N) and the second data sets (X1*Y1*Z1*M), the processing device 120 may concatenate the first and second data sets to obtain concatenated data X1 *Y1*Z1*(M+N), and input the concatenated data into the first deep learning model 440. The (M+N) dimension in the concatenated data X1*Y1*Z1*(M+N) may be used as a count of input channels of the first deep learning model 440.

In some embodiments of the present disclosure, the first deep learning model is used to generate the PET reconstruction image based on the target PET data and the correction data, which can reduce the calculation amount and improve the image reconstruction efficiency of the PET reconstruction image. Since the first deep learning model learns the optimal mechanism for PET image reconstruction based on a large amount of data during the training process, the reconstruction of the PET image generated by the first deep learning model may have high accuracy. By introducing the correction data, the quality of the final PET reconstruction image can be improved. In some embodiments, by splitting the target PET data and correction data, respectively, and then performing the feature extraction on the split target PET data and the split correction data, the data processing efficiency can be improved, thereby speeding up the image reconstruction. In some embodiments, the split target PET data and the split correction data may be further concatenated in a specific manner, which can improve the correction efficiency and accuracy of the correction data to the target PET data.

FIG. 5 is a schematic diagram illustrating another exemplary process 500 for generating a PET reconstruction image according to some embodiments of the present disclosure. In some embodiments, the operation 230 of FIG. 2 may be achieved by performing the process 500. As shown in FIG. 5, the process 500 includes the following operations. In some embodiments, the process 500 may be performed by the image reconstruction module 1430 of the processing device 120.

In 510, corrected target PET data may be generated based on the target PET data and the correction data, wherein the corrected target PET data has a TOF histo-image format.

For example, the correction data may include an attenuation map. The processing device 120 may multiply the attenuation map and the target PET data to correct the target PET data. As another example, the correction data may include scatter correction data. The processing device 120 may subtract the scatter correction data from the target PET data to correct the target PET data. As a further example, the correction data may include random correction data. The processing device 120 may subtract the random correction data from the target PET data to correct the target PET data. When the correction data includes a plurality of correction data subsets, the target PET data may be corrected sequentially or simultaneously based on the plurality of correction data subsets to obtain the final corrected target PET data.

In some embodiments, to facilitate the correction of the target PET data directly through the correction data, the correction data may be converted into the TOF histo-image format. That is, the coordinate format of each data point of the correction data may also be (x, y, z, φ, θ), and then the correction data in the TOF histo-image format may be used to correct the target PET data.

In some embodiments, as described in FIG. 2, the PET scan is a continuous process, and the original PET data may include a plurality of sets of original PET data corresponding to a plurality of time points or time periods. By performing a format conversion on the sets of original PET data, a plurality of sets of target PET data may be obtained. Similarly, the correction data may also include a plurality of sets of correction data corresponding to the plurality of time points or time periods. For each set of target PET data corresponding to a certain time point or time period, the processing device 120 may use the correction data corresponding to the time point or time period to correct the set of target PET data. That is to say, the processing device 120 may correct the sets of target PET data respectively to obtain the plurality of sets of corrected target PET data.

In 520, a PET reconstruction image may be generated based on the corrected target PET data.

In some embodiments, the processing device 120 may generate the PET reconstruction image through various reconstruction algorithms based on the corrected target PET data. For example, the reconstruction algorithms may include iterative reconstruction algorithms, indirect reconstruction algorithms, direct reconstruction algorithms, model-based reconstruction algorithms, or the like.

In some embodiments, as shown in FIG. 5, the processing device 120 may input the corrected target PET data into a second deep learning model to generate the PET reconstruction image. The second deep learning model may be a model configured to generate PET reconstruction images based on corrected target PET data. In some embodiments, the second deep learning model may be any type of models, such as a CNN model and a GAN model. The input of the second deep learning model may be the corrected target PET data, and the output of the second deep learning model may be the PET reconstruction image.

In some embodiments, the training process of the second deep learning model may be similar to that of the first deep learning model 330, except that the training data is different. For example, the processing device 120 may train the second deep learning model based on fourth training samples with labels. The fourth training sample may include sample corrected target PET data, and the labels may be a ground truth PET reconstruction image. The training of the second deep learning model may be performed by the training module 1440.

In some embodiments of the present disclosure, before inputting the target PET data into the second deep learning model, the corrected target PET data may be generated by correcting the target PET data based on the correction data, and then the PET reconstruction image may be generated based on the corrected target PET data, which can reduce the amount of data to be processed by the second deep learning model, and improve the generation efficiency of the PET reconstruction image. At the same time, the training difficulty of the second deep learning model can be reduced.

FIG. 6 is a schematic diagram illustrating another exemplary process 600 for generating a PET reconstruction image according to some embodiments of the present disclosure. In some embodiments, operation 230 of FIG. 2 may be achieved by performing the process 600. In some embodiments, the process 600 may be performed by the image reconstruction module 1430 of the processing device 120.

In process 600, the PET reconstruction image may be generated based on the correction data and the target PET data. The correction data may be divided into first correction data and second correction data. The correction data used to correct the target PET data may be referred to as the first correction data, and the correction data other than the first correction data used to correct the initial PET reconstruction image may be referred to as the second correction data. For example, the correction data may include an attenuation map, scatter correction data, and random correction data. The first correction data may include an attenuation map. The second correction data may include the scatter correction data and the random correction data.

As shown in FIG. 6, the process 600 may include the following operations.

In 610, corrected target PET data may be generated by correcting the target PET data using the first correction data.

For example, the first correction data may include one or two of the attenuation map, the scatter correction data, and the random correction data. The processing device 120 may correct the target PET data using the correction method described in operation 510.

In some embodiments, the processing device 120 may randomly select one or more types of correction data from the correction data as the first correction data. In some embodiments, the processing device 120 may also select one or more types of correction data from the correction data as the first correction data by vector matching. For example, a reference database may be constructed, wherein each record in the reference database is used to store a reference feature vector of a historical PET scan, correction data of PET data obtained in the historical PET scan, and a corresponding correction result score. The reference feature vector of a historical PET scan may be constructed according to acquisition parameters, environmental parameters of the historical PET scan, or the like. The correction result score of each record may be determined based on the quality of a PET image generated using the corresponding correction data. The processing device 120 may search the reference database for at least one reference vector whose distance to the feature vector corresponding to the current scan is smaller than a threshold. The processing device 120 may determine the correction result score of the record corresponding to the at least one reference vector and use the correction data of the record with the highest score as the first correction data.

In some embodiments, for each data of the attenuation map, the scatter correction data, and the random correction data, the processing device 120 may generate a reference PET reconstruction image based on the data; determine an evaluation score corresponding to the data based on the reference PET reconstruction image; and determine the first correction data based on the evaluation score corresponding to the each data.

Taking the attenuation map as an example, the processing device 120 may correct the target PET data based on the attenuation map and then generate a reference PET reconstruction image corresponding to the attenuation map based on the corrected target PET data (for example, using the second deep learning model described in FIG. 5). Alternatively, the processing device 120 may combine the attenuation map and the target PET data, and input the combined attenuation map and the target PET data into the first deep learning model to obtain a reference PET reconstruction image corresponding to the attenuation map.

The evaluation score may refer to a score obtained by evaluating the reference PET reconstruction image. For example, the better the quality of the reference PET reconstruction image (e.g., the fewer the artifacts), the higher the evaluation score may be.

In some embodiments, the processing device 120 may obtain the evaluation score using various methods. For example, the evaluation score may be determined manually. As another example, the processing device 120 may use a scoring model to process the reference PET reconstruction image corresponding to a certain type of correction data to determine the evaluation score corresponding to the type of correction data, where the scoring model is a trained machine learning model. For example, the scoring model may include any type of model, such as an RNN model, a DNN model, a CNN model, or the like, or any combination thereof. The input of the scoring model may be the reference PET reconstruction image, the output of the scoring model may be a quality score of the reference PET reconstruction image, and the quality score may be used as an evaluation score of the correction data corresponding to the reference PET reconstruction image. In some embodiments, the scoring model may be trained using sample reference PET reconstruction images and corresponding ground truth quality scores. The training of the scoring model may be performed by the training module 1440. Determining the evaluation scores corresponding to various correction data through the scoring model can improve the calculation speed, avoid errors in manual judgment, and make the obtained evaluation scores more accurate.

In some embodiments, the processing device 120 may determine the first correction data based on evaluation scores of various correction data. For example, the processing device 120 may determine a type of correction data having a highest evaluation score as the first correction data. As another example, the processing device 120 may determine one or more types of correction data whose evaluation scores are larger than a threshold as the first correction data. Compared with the method of randomly selecting the first correction data, determining the first correction data based on the evaluation scores of various correction data can make the selection of the first correction data more accurate, thereby improving the accuracy of the correction of the target PET data.

In operation 620, an initial PET reconstruction image may be generated based on the corrected target PET data.

The generation of the initial PET reconstruction image may be performed in a similar manner as that of the PET reconstruction image as described in connection with FIG. 5, and the descriptions thereof are not repeated here.

In operation 630, the PET reconstruction image may be generated by correcting the initial PET reconstruction image based on the second correction data.

For example, the processing device 120 may correct the initial PET reconstruction image through a correction model or an algorithm based on the second correction data. In some embodiments, after determining the first correction data, the processing device 120 may use the correction data with a highest evaluation score among the remaining correction data as the second correction data. In some embodiments, the processing device 120 may use all other correction data in the correction data except the first correction data as the second correction data. Using the second correction data to correct the initial PET reconstruction image can further improve the accuracy of the PET reconstruction image.

Since different correction data have different correction effects on PET data and image domain data, some embodiments of the present disclosure may divide the correction data into the first correction data and the second correction data, which may be used to correct the target PET data and the initial PET reconstruction image respectively. The image reconstruction method disclosed in the present disclosure can maximize the advantages of different correction data and improve the accuracy of the final PET reconstruction image.

FIG. 7 is a schematic diagram illustrating another exemplary process 700 for generating a PET reconstruction image according to some embodiments of the present disclosure. In some embodiments, operation 230 of FIG. 2 may be achieved by performing the process 700. In some embodiments, the process 700 may be performed by the image reconstruction module 1430 of the processing device 120.

In process 700, the PET reconstruction image is generated based on the correction data and the target PET data, wherein the correction data may include an attenuation map, scatter correction data, and random correction data. As shown in FIG. 7, the process 700 may include the following operations.

In 710, a first PET reconstruction image is generated based on the attenuation map and the target PET data.

For example, the processing device 120 may obtain the first PET reconstruction image by processing the target PET data and the attenuation map using the first deep learning model. As another example, the processing device 120 may correct the target PET data based on the attenuation map, input the corrected target PET data into the second deep learning model, and obtain the first PET reconstruction image output by the second deep learning model. For more descriptions of the first deep learning model and the second deep learning model, please refer to FIGs. 3-5 and related descriptions thereof.

In 720, a second PET reconstruction image is generated based on the scatter correction data and the target PET data.

In 730, a third PET reconstruction image is generated based on the random correction data and the target PET data.

The method for generating the second PET reconstruction image and the third PET reconstruction image is similar to the method for generating the first PET reconstruction image in operation 710.

It should be noted that the above operations 710-730 may be executed sequentially in any order or simultaneously.

In 740, the PET reconstruction image is generated by processing the first, second, and third PET reconstruction images using an image fusion model, the image fusion model being a trained machine learning model.

The image fusion model may be a model configured to fuse a plurality of images into a single image. In some embodiments, the image fusion model may be any type of machine learning model, such as a CNN model. In some embodiments, the processing device 120 may directly input the first, second, and third PET reconstruction images into the image fusion model, and the image fusion model may output the PET reconstruction image. In some embodiments, the input of the image fusion model may further include environmental parameters. For more descriptions of the environmental parameters, please refer to the content in FIG. 3. In some embodiments, the image fusion model may be trained and generated based on a sample first PET reconstruction image, a sample second PET reconstruction image, a sample third PET reconstruction image, and a corresponding ground truth PET reconstruction image. The training of the image fusion model may be performed by the training module 1440.

In some embodiments, the processing device 120 may also input the first, second, and third PET reconstruction images and quality assessment scores thereof into the image fusion model to obtain the PET reconstruction image. The quality assessment score of an image may be used to evaluate the quality of the image. In such cases, the training data of the image fusion model may further include a sample quality assessment score of each image of the sample first, second, and third PET reconstruction images.

In some embodiments, the quality assessment scores of the first, second, and third PET reconstruction images may be determined manually. Alternatively, the quality assessment scores of the first, second, and third PET reconstruction images may be determined based on a quality assessment model. Specifically, for each image of the first, second, and third PET reconstruction images, the processing device 120 may determine the quality assessment score of the image by processing the image using the quality assessment model, the quality assessment model being a trained machine learning model. The training of the quality assessment model may be performed by the training module 1440.

The quality assessment model may be configured to determine a quality assessment score of an input image. In some embodiments, the quality assessment model may include any one or a combination of any type of models, such as an RNN model, a DNN, a CNN model, or the like. In some embodiments, the quality assessment model may be trained using sample images and ground truth sores thereof. By inputting the quality assessment scores into the image fusion model, reference information for image fusion can be provided to the image fusion model, and the accuracy of image fusion can be improved. Using the quality assessment model can improve the accuracy of the obtained quality assessment scores, and reduce the amount and errors of manual calculation, thereby improving the accuracy of subsequent image fusion.

In some embodiments, the image fusion model and the first deep learning model may be generated through joint training, and the joint training may be performed by the training module 1440. In the joint training, a sample attenuation map, sample scatter correction data, sample random correction data, and sample target PET data may be respectively input into the initial first deep learning model to obtain the sample first, second, and third PET reconstruction images. Then the sample first, second, and third PET reconstruction images may be input into the initial image fusion model to obtain a predicted PET reconstruction image. The initial first deep learning model and the initial image fusion model may be iteratively updated based on the predicted PET reconstruction image and the ground truth PET reconstruction image until a preset condition is satisfied.

In some embodiments, the image fusion model and the quality assessment model may be generated through joint training, which may be performed by the training module 1440. In the joint training, the sample first, second, and third PET reconstruction images may be respectively input into the initial quality assessment model to obtain the sample quality assessment score of each sample PET reconstruction image. Then the sample quality assessment score of each sample PET reconstruction image and the sample first, second, and third PET reconstruction images may be input into the initial image fusion model to obtain the predicted PET reconstruction image. The initial quality assessment model and the initial image fusion model may be iteratively updated based on the predicted PET reconstruction image and the ground truth PET reconstruction image until a preset condition is satisfied.

In some embodiments of the present disclosure, the image fusion model may be configured to fuse the PET reconstruction images generated based on various correction data to generate a final PET reconstruction image, which can improve the accuracy of reconstruction and improve the quality of the resulting PET reconstruction image.

FIG. 8 is a schematic diagram illustrating an exemplary process 800 for obtaining a PET parametric image according to some embodiments of the present disclosure. In some embodiments, operation 230 of FIG. 2 may be achieved by performing the process 800. As shown in FIG. 8, the process 800 may include the following operations. In some embodiments, the process 800 may be performed by the image reconstruction module 1430 of the processing device 120.

In some embodiments, the original PET data may include dynamic original PET data, which includes a plurality of sets of original PET data (denoted as P1-PN) corresponding to a plurality of time points or time periods. Similarly, the correction data may be dynamic correction data and include a plurality of sets of correction data (denoted as C1-CN) corresponding to the plurality of time points or time periods. The original PET data and the correction data corresponding to the same time point or time period may be regarded as corresponding to each other.

In 810, the dynamic original PET data may be corrected based on the dynamic correction data; and corrected dynamic original PET data may be converted into corrected dynamic target PET data, wherein the corrected dynamic target PET data has a TOF histo-image format.

For example, for a set of original PET data Pi in the dynamic original PET data, the processing device 120 may obtain a set of corrected original PET data Pi' by correcting the set of original PET data Pi based on a corresponding set of correction data Ci. The processing device 120 may further convert the corrected original PET data Pi' into corrected target PET data Pi" in the TOF histo-image format. The corrected target PET data P1"-PN" may form the corrected dynamic target PET data. The corrected dynamic target PET data may be used as the reconstruction data described in FIG. 2. In some embodiments, the processing device 120 may perform a format conversion on the original PET data Pi first and then correct the original PET data Pi in the TOF histo-image format based on the correction data Ci to obtain the corrected target PET data Pi".

In 820, original parametric data may be obtained by processing the corrected dynamic target PET data based on a pharmacokinetic model, and the PET parametric image may be generated based on the original parametric data. The original parametric data may have a TOF histo-image format.

In some embodiments, the original parametric data obtained based on the pharmacokinetic model may include kinetic parameters. The kinetic parameters may be usually used in dynamic PET data and used to represent physiological data of each physical point on the scanned object, such as a drug metabolism rate, binding efficiency, etc.

In some embodiments, the pharmacokinetic model may extract physiological information from time-related data. That is, the pharmacokinetic model may extract the original parametric data. For example, an input of the pharmacokinetic model may include the corrected dynamic target PET data. An output of the pharmacokinetic model may be the kinetic parameters in TOF histo-image format, that is, the original parametric data.

In some embodiments, the pharmacokinetic model may include a linear model and a nonlinear model. For example, the linear model may include at least one of a Patlak model or a Logan model. The nonlinear model may include a compartment model (e.g., one-compartment, two-compartment, three-compartment, or other multi-compartment models).

In some embodiments, when the pharmacokinetic model is a Patlak model, the input of the pharmacokinetic model may further include an input function, and the input function may be a curve indicating human plasma activity over time. In some embodiments, the input function may be obtained by blood sampling. For example, during a scanning process, blood samples may be collected at different time points, and the input function may be obtained based on blood sample data. In some embodiments, the input function may be obtained from a dynamic PET reconstruction image. For example, a region of interest (ROI) of a blood pool may be selected first from the dynamic PET reconstruction image, and a time activity curve (TAC) inside the ROI may be obtained and corrected as the input function. In some embodiments, the input function may also be generated by supplementing a population input function. For more descriptions of the input function, please refer to other parts of the present disclosure. For example, refer to FIG. 10 and related descriptions thereof.

In some embodiments, the processing device 120 may generate the PET parametric image based on the original parametric data. For example, the processing device 120 may obtain the PET parametric image by performing the image reconstruction based on the original parametric data through an iterative algorithm. The iterative algorithm may include the ML-EM iterative algorithm, the iterative algorithm described in FIG. 10, or the like. As another example, the processing device 120 may also obtain the PET parametric image based on the original parametric data using a third deep learning model. In some embodiments, the third deep learning model may generate the PET parametric image based on the kinetic parametric data in the TOF histo-image format. In some embodiments, the third deep learning model may be a CNN model. In some embodiments, the third deep learning model may be trained and generated based on sample original parametric data (i.e., sample kinetic parametric data) and a corresponding ground truth PET parametric image. The training of the third deep learning model may be performed by the training module 1440.

In some embodiments of the present disclosure, by performing a parameter analysis based on the corrected dynamic target PET data, obtaining the original parametric data through the pharmacokinetic model, and then obtaining the PET parametric image through an iterative algorithm and/or a deep learning model, higher computational efficiency can be obtained and the PET parametric image can be obtained more quickly.

In some embodiments, the processing device 120 may obtain the PET parametric image via other ways. For example, the processing device 120 may dynamically divide the original PET reconstruction images corresponding to a plurality of projection angles to obtain at least one frame of static PET reconstruction image and corresponding scatter estimation data. The original PET reconstruction images may refer to PET images of a plurality of frames reconstructed based on the original PET data. The dynamic PET reconstruction image may be generated based on the scatter estimation data and the at least one frame of static PET reconstruction image, and a PET parametric image may be obtained based on the dynamic PET reconstruction image.

FIG. 9 is a schematic diagram illustrating an exemplary process 900 for obtaining a motion-corrected PET reconstruction image according to some embodiments of the present disclosure. In some embodiments, the process 900 may be performed after the process 300. As shown in FIG. 9, the process 900 may include the following operations. In some embodiments, the process 900 may be performed by the image reconstruction module 1430 of the processing device 120.

In 910, deformation field information may be determined based on a plurality of static PET reconstruction images.

A static PET reconstruction image may be a PET reconstruction image of a single frame corresponding to a time point or time period. For more descriptions of a PET reconstruction image, please refer to FIG. 2. It can be understood that the PET scan may last for a period of time, and the existence of physiological movements such as human breathing or heartbeat may cause inconsistencies between the plurality of static PET reconstruction images. For example, in the static PET reconstruction images corresponding to different time periods, the lungs of a human body may be located in different positions. Therefore, physiological motion correction may need to be performed on the plurality of static PET reconstruction images.

The deformation field information may reflect the deformation information of the scanned object in the plurality of static PET reconstruction images. For example, the deformation field information may reflect displacement information of points on the scanned object in the plurality of static PET reconstruction images. In some embodiments, the deformation field information may include a 4D image deformation field.

In some embodiments, the processing device 120 may determine the deformation field information based on the plurality of static PET reconstruction images through various methods.

For example, the processing device 120 may select a static PET reconstruction image as a reference image and determine deformation fields between other static PET reconstruction images and the reference image. The deformation field between images may be determined using an image registration algorithm, an image registration model, or the like. Merely by way of example, a trained image registration model may be configured to process two static PET reconstruction images and output a deformation field between the two static PET reconstruction images.

In 920, based on the deformation field information and the plurality of static PET reconstruction images, a motion-corrected static PET reconstruction image may be obtained through a motion correction algorithm.

For example, for each of images other than the reference image in the plurality of static PET reconstruction images, the processing device 120 may deform the image based on the deformation field from the image to the reference image to convert the to a same physiological phase (e.g., a respiration phase) as the reference image. Optionally, the processing device 120 may fuse the reference image with other deformed images to obtain a motion-corrected static PET reconstruction image. Performing motion correction can reduce or eliminate the influence of physiological motion and improve reconstruction quality (e.g., resulting in an image having fewer motion artifacts).

In some embodiments, the processing device 120 may generate the PET parametric image based on the reconstruction data. In some embodiments, the PET parametric image may be generated using a direct or indirect reconstruction method. The direct reconstruction method may reconstruct the parametric image by performing an iteration based on the reconstruction data. The indirect reconstruction method may obtain an input function by performing reconstruction based on the reconstruction data first, and then obtain the parametric image by performing secondary reconstruction based on the input function.

In some embodiments, the processing device 120 may generate a preliminary PET parametric image based on the reconstruction data; and generate the PET parametric image through an iterative process, wherein the iterative process includes a plurality of iterations. For the purpose of illustration, FIG. 10 shows a schematic diagram illustrating an exemplary process of a current iteration 1000 according to some embodiments of the present disclosure. In some embodiments, the current iteration 1000 may be performed by the image reconstruction module 1430 of the processing device 120. As shown in FIG. 10, the current iteration 1000 includes the following operations.

In 1010, an iterative input function may be determined based on an initial image of the current iteration.

The initial image may refer to image data used to determine the iterative input function in each iteration. In some embodiments, the initial image may be a dynamic parametric image, including a plurality of frames.

In some embodiments, if the current iteration is the first iteration, the initial image may be generated based on the preliminary PET parametric image which is generated based on the reconstruction data. For example, when the reconstruction data is original scanning data (such as original PET data) obtained using an imaging device, the processing device 120 may perform correction and reconstruction on the reconstruction data to obtain the preliminary PET parametric image. As another example, when the reconstruction data is the original parametric data obtained by processing the corrected dynamic PET data based on the pharmacokinetic model, the processing device 120 may reconstruct the original parametric data based on a model or reconstruction algorithm to obtain the preliminary PET parametric image. For more descriptions, refer to the related descriptions of operation 820 in FIG. 8. In some embodiments, the initial image in the first iteration may also be determined based on other ways, such as using a random image.

If the current iteration is not the first iteration, the initial image may be obtained in a previous iteration, which will be described in detail in operation 1030.

The iterative input function may refer to an input function obtained based on the initial image of the iteration in each round of iteration. The input function may be the curve indicating human plasma activity over time.

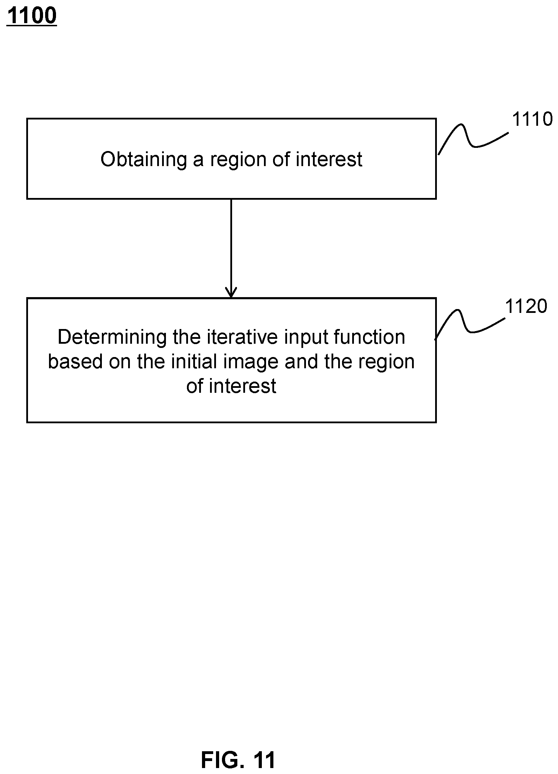

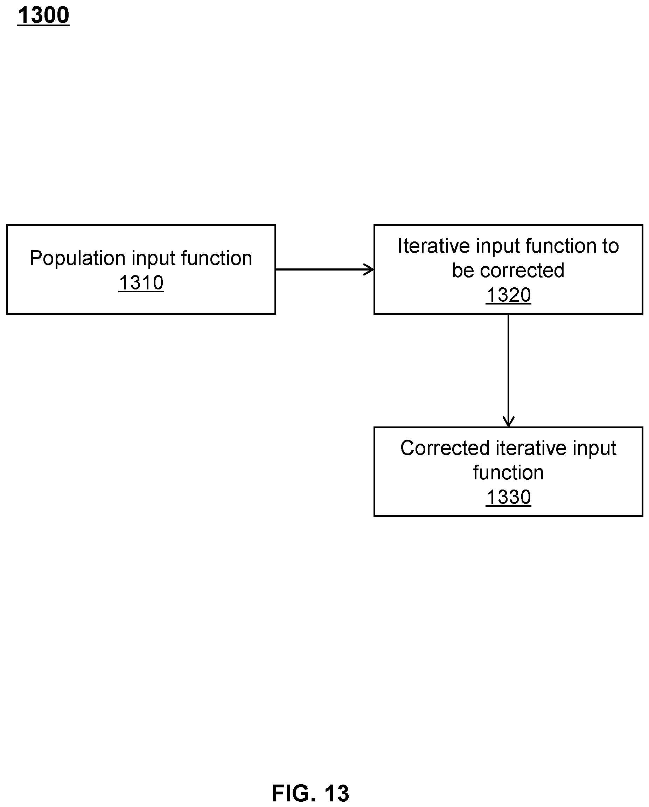

In some embodiments, the iterative input function of the current iteration may be determined based on the initial image of the iteration. For example, the processing device 120 may select an ROI of a blood pool from the initial image of the current iteration, then obtain a TAC inside the ROI of the blood pool and perform related corrections (for example, a plasma/whole blood ratio correction, a Metabolize rate correction, a partial volume correction, etc.) on the TAC to determine the iterative input function of the current iteration. For details about the related corrections, refer to FIG. 13 and related descriptions thereof. As another example, the processing device 120 may process the initial image based on the pharmacokinetic model to obtain the pharmacokinetic parameter value(s), and determine the iterative input function based on the pharmacokinetic parameter values of the initial image. For more details about determining the iterative input function, refer to the related description of FIG. 11.

In 1020, an iterative parametric image may be generated by performing a parametric analysis based on the iterative input function.

The iterative parametric image may refer to a parametric image obtained in each iteration. In some embodiments, the processing device 120 may obtain the iterative parametric image of the current iteration based on the iterative input function and the initial image of the current iteration. For example, the following equation (1) may be used to determine the iterative parametric image: $\left\{\begin{matrix}{κ}^{l + 1} = \frac{{κ}^{l}}{{\sum }_{1}^{N} {S}_{n}} {\sum }_{n = 1}^{N} {S}_{n} \frac{{x}_{n}^{m}}{{S}_{n} {κ}^{l} + {C}_{n} {b}^{l}} \\ {b}^{l + 1} = \frac{{b}^{l}}{{\sum }_{1}^{N} {C}_{n}} {\sum }_{n = 1}^{N} {C}_{n} \frac{{x}_{n}^{m}}{{S}_{n} {κ}^{l} + {C}_{n} {b}^{l}}\end{matrix}\right.$ (1) wherein, m and n are positive integers, ${x}_{n}^{m}$ refers to n-th frame image in the initial image of the m-th iteration; *Sₙ* , *Cₙ* refer to kinetic model matrixes calculated based on the iterative input function; and *κ*^{*l*+1}, *b*^{*l*+1} refers to the iterative parametric image, and the iterative parametric image may be determined by determining *κ*^{*l*+1}, *b*^{*l*+1}.

In 1030, an initial image of a next iteration may be generated based on the iterative parametric image.

In some embodiments, the iterative parametric image obtained in each iteration may be used to determine an iterative dynamic parametric image, and the iterative dynamic parametric image may be used as the initial image of the next iteration. The iterative parametric image obtained by the last iteration may be used as the PET parametric image output when the iterative process is stopped.

In some embodiments, an iterative dynamic parametric image may be generated based on the iterative parametric image of the current iteration and the pharmacokinetic model (e.g., the Patlak model). For example, the processing device 120 may use the equation (2) to obtain the iterative dynamic parametric image: ${x}_{n}^{m + 1} = \frac{{f}^{m} \left({K}^{l}, {b}^{l}\right)}{{P}^{T} ⋅ 1} {P}^{T} \frac{{y}_{n}}{{Pf}^{m} \left({K}^{l}, {b}^{l}\right) + {S}_{n} + {R}_{n}}$ (2) wherein, m and n are positive integers, ${x}_{n}^{m + 1}$ refers to the n-th frame image in the iterative dynamic parametric image generated in the m-th iteration (that is, the initial image of the (m+1)-th iteration); *f^{m}*(*K^{l}*,*b^{l}*) refers to the Patlak model, and *f^{m}*(*K^{l}*,*b^{l}*) *= Sₙκ^{l} + Cₙ*(*b^{l}*); *K^{l}*,*b^{l}* refers to the iterative parametric image, *Sₙ, Cₙ* refer to the kinetic model matrixes calculated through the iterative input function, *Rₙ* may indicate a random projection estimation and a scatter projection estimation, P is a system matrix, and *yₙ* may indicate a 4D sinogram.

In some embodiments, when a preset iteration condition is satisfied, the processing device 120 may terminate the iterative process and obtain the PET parametric image and the input function. The preset iteration condition may include that iteration convergence has been achieved or a preset count of iterations has been performed. For example, the iteration convergence may be achieved if the difference value between iterative input functions obtained in consecutive iterations is smaller than a preset difference value. In some embodiments, the processing device 120 may use the iterative input function in the last iteration as the input function output by the last iteration, and use the iterative parametric image output by the last iteration as the PET parametric image.

In some embodiments of the present disclosure, in the process of reconstructing the parametric image, the initial dynamic image data (that is, the preliminary PET parametric image) may be obtained by image reconstruction first, the input function may be obtained based on the initial dynamic image data, and then the input function may be applied in the secondary reconstruction to generate the PET parametric image. Therefore, in the whole reconstruction process, not only the PET parametric image but also the input function can be obtained, which can save extra reconstruction estimation and effectively improve the reconstruction efficiency.

FIG. 11 is a flowchart illustrating an exemplary process 1100 for determining an iterative input function according to some embodiments of the present disclosure. In some embodiments, operation 1010 of FIG. 10 may be achieved by performing the process 1100. As shown in FIG. 11, the process 1100 may include the following operations. In some embodiments, the process 1100 may be performed by the image reconstruction module 1430 of the processing device 120.

In 1110, a region of interest (ROI) may be obtained.

The ROI refers to a region of interest in a reference image. The reference image may be an image obtained by a CT scan or a PET scan. For example, the reference image may include a PET reconstruction image obtained based on the target PET data and the correction data. In some embodiments, the ROI may correspond to the heart or an artery. For example, the ROI may include a heart blood pool, an arterial blood pool, etc.

In some embodiments, the ROI may be a two-dimensional or three-dimensional region, wherein the value of each pixel or voxel may reflect the activity value of the scanned object at the corresponding position. The ROI may be a fixed region in each frame of the reference image, and the fixed regions in multiple frames of the reference image may provide information relating to a dynamic change of the ROI.

In some embodiments, the ROI may be obtained based on a CT image or a PET image. For example, the blood pool in a CT image of a heart may be taken as the ROI. In some embodiments, the ROI may also be obtained by mapping the ROI determined based on the CT image onto the PET image.

In 1120, the iterative input function may be determined based on the initial image and the ROI.

In some embodiments, the processing device 120 may determine an ROI corresponding to a part of interest of the scanned object from the initial image based on the ROI determined in operation 1110.

In some embodiments, the iterative input function is related to the TAC, the abscissa of the TAC may correspond to a time point corresponding to each frame in the initial image, and the ordinate may indicate an activity concentration, the activity concentration may be obtained based on an average of all pixel values or all voxel values of the ROI in the initial image, and the iterative input function may be determined after the TAC is determined. For example, an average value of all pixel values or all voxel values of the ROI in each frame of the initial image may be determined, and the average value may be used as the ordinate, and the corresponding frame count of the plurality of frames may be used as the abscissa, and then the TAC may be obtained and the iterative input function may be determined.

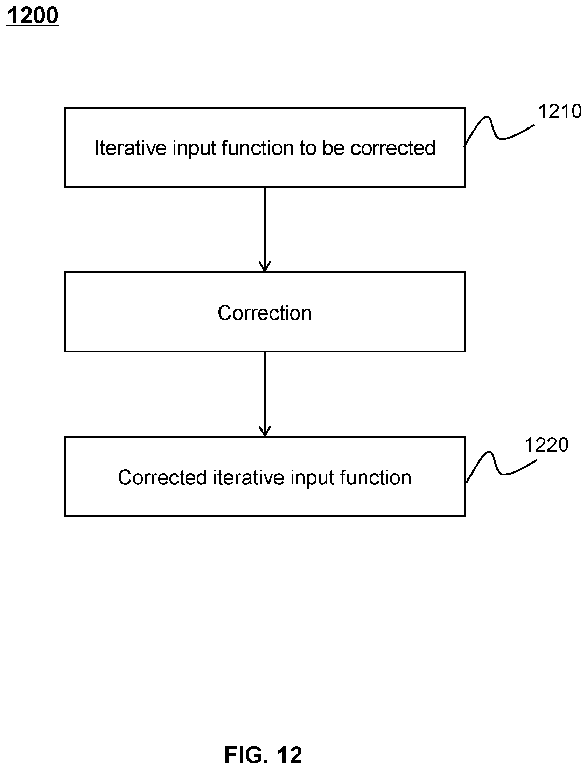

In some embodiments, processing device 120 may perform correction on the iterative input function. For more details about correcting the iterative input function, please refer to FIG. 12 and related descriptions thereof.

Determining the iterative input function based on the initial image and the ROI can avoid cumbersome operations such as arterial blood sampling, making a method for obtaining the input function simple and easy to operate. The input function determined by this method can reflect the specificity of the scanned object and make the determined input function more accurate.

In some embodiments, since noise or missing data may exist in the iterative input function, the processing device 120 may correct the iterative input function to improve the accuracy of the iterative input function. FIG. 12 is a schematic diagram illustrating an exemplary process 1200 for correcting an iterative input function according to some embodiments of the present disclosure. In some embodiments, the process 1200 may be performed by the processing device 120.

As shown in FIG. 12, an iterative input function 1210 may be corrected to determine a corrected iterative input function 1220. In some embodiments, the correcting the iterative input function may include supplementing the iterative input function based on a population input function. The population input function may be a plasma TAC that can be used as a template determined based on plasma TACs of a plurality of people, also referred to as a standard arterial input function (SAIF). For more details about correcting the iterative input function based on the population input function, please refer to FIG. 13 and related descriptions thereof.

In some embodiments, the method for correcting the iterative input function may include a whole blood/plasma drug ratio correction, a metabolize rate correction, a partial volume correction (PVC), a model correction (for example, using a multi-exponential model for correction), the present disclosure may do not limit herein. The accuracy of the iterative parametric image can be effectively improved by correcting the iterative input function.

FIG. 13 is a schematic diagram illustrating an exemplary process 1300 for correcting an initial iterative input function based on a population input function according to some embodiments of the present disclosure.

As shown in FIG. 13, a population input function 1310 may be used to perform a supplement on an iterative input function 1320 to be corrected to determine a corrected iterative input function 1330. In some embodiments, the correction method for supplementing the iterative input function based on the population input function and the other correction methods mentioned above may be used alternatively or in combination. For example, the correction (e.g., blood/plasma drug ratio correction) may be performed on the iterative input function 1320 first, and then the corrected iterative input function may be supplemented through the population input function 1310.

The supplement of the iterative input function 1320 may be performed by supplementing missing data (for example, missing data of first few minutes) in the iterative input function 1320 based on the population input function 1310. For example, the population input function 1310 and the iterative input function 1320 may correspond to a same region of interest, and a part corresponding to the missing part of the iterative input function 1320 may be determined in the population input function 1310, and the abscissa and ordinate values of the determined part may be regarded as supplementary data. In some embodiments, the supplementary data may be supplemented to the iterative input function 1320 to determine the corrected iterative input function 1330. In some embodiments, the supplementary data may also be differentially processed. For example, the supplementary data may be adjusted according to feature parameters (for example, height, weight, disease, etc.) of the scanned object to determine the corrected iterative input function 1330.

Correcting the iterative input function based on the population input function having a similar curve shape to the iterative input function can efficiently supplement the missing part of the input function. At the same time, because the population input function has an overall commonality and cannot reflect the specificity of different scanned objects, by differentially processing the supplementary data, the correction of the iterative input function can take the specificity of the scanned object into account to obtain a parametric image with improved accuracy.

The operations of the processes presented above are intended to be illustrative. In some embodiments, the processes may be accomplished with one or more additional operations not described and/or without one or more of the operations discussed. Additionally, the order in which the operations of the processes, as illustrated in figures and described above is not intended to be limiting. For example, the processing device 120 may supplement the iterative input function based on the population input function first, and then perform other corrections (such as the whole blood/plasma drug ratio correction) on the supplemented iterative input function.

FIG. 14 is a block diagram illustrating an exemplary processing device 120 according to some embodiments of the present disclosure. As shown in FIG. 14, the processing device 120 may include a correction data determination module 1410, a reconstruction data determination module 1420, an image reconstruction module 1430, and a training module 1440.

The correction data determination module 1410 may be configured to determine correction data based on original PET data. Details regarding the correction data may be found elsewhere in the present disclosure (e.g., operation 210 and the relevant descriptions thereof).

The reconstruction data determination module 1420 may be configured to determine reconstruction data based on the correction data. Details regarding the reconstitution data may be found elsewhere in the present disclosure (e.g., operation 220 and the relevant descriptions thereof).

The image reconstruction module 1430 may be configured to generate, based on the reconstruction data, one or more of a PET reconstruction image and a PET parametric image. Details regarding the PET reconstruction image and the PET parametric image may be found elsewhere in the present disclosure (e.g., operation 230 and the relevant descriptions thereof).

The training module 1440 may be configured to generate one or more models used in image reconstruction, such as an image fusion model, a first deep learning model, a second deep learning model, or the like, or any combination thereof. Details regarding the model(s) may be found elsewhere in the present disclosure (e.g., FIGs. 2-9 and the relevant descriptions thereof).

It should be noted that the above descriptions of the processing device 120 are provided for the purposes of illustration, and are not intended to limit the scope of the present disclosure. For persons having ordinary skills in the art, various variations and modifications may be conducted under the guidance of the present disclosure. However, those variations and modifications do not depart from the scope of the present disclosure. In some embodiments, the processing device 120 may include one or more other modules. For example, the processing device 120 may include a storage module to store data generated by the modules in the processing device 120. In some embodiments, any two of the modules may be combined as a single module, and any one of the modules may be divided into two or more units. In some embodiments, the training module 1440 and other modules of the processing device 120 may be implemented on different computing devices. For example, the training module 1440 may be implemented on a computing device of a vendor of one or more deep learning models described above, and the other modules of the processing device 120 may be implemented on a computing device of a user of the deep learning model(s).

It should be noted that the above descriptions are merely provided for the purposes of illustration, and are not intended to limit the scope of the present disclosure. For persons having ordinary skills in the art, multiple variations and modifications may be made under the teachings of the present disclosure. However, those variations and modifications do not depart from the scope of the present disclosure.

Having thus described the basic concepts, it may be rather apparent to those skilled in the art after reading this detailed disclosure that the foregoing detailed disclosure is intended to be presented by way of example only and is not limiting. Various alterations, improvements, and modifications may occur and are intended to those skilled in the art, though not expressly stated herein.

Moreover, certain terminology has been used to describe embodiments of the present disclosure. For example, the terms "one embodiment," "an embodiment," and/or "some embodiments" mean that a particular feature, structure, or characteristic described in connection with the embodiment is included in at least one embodiment of the present disclosure. Therefore, it is emphasized and should be appreciated that two or more references to "an embodiment," "one embodiment," or "an alternative embodiment" in various portions of this specification are not necessarily all referring to the same embodiment. Furthermore, the particular features, structures, or characteristics may be combined as suitable in one or more embodiments of the present disclosure.

Further, it will be appreciated by one skilled in the art, aspects of the present disclosure may be illustrated and described herein in any of a number of patentable classes or context including any new and useful process, machine, manufacture, or collocation of matter, or any new and useful improvement thereof. Accordingly, aspects of the present disclosure may be implemented entirely hardware, entirely software (including firmware, resident software, micro-code, etc.), or combining software and hardware implementation that may all generally be referred to herein as a "unit," "module," or "system." Furthermore, aspects of the present disclosure may take the form of a computer program product embodied in one or more computer-readable media having computer-readable program code embodied thereon.

Similarly, it should be appreciated that in the foregoing description of embodiments of the present disclosure, various features are sometimes grouped together in a single embodiment, figure, or description thereof for the purpose of streamlining the disclosure aiding in the understanding of one or more of the various embodiments. This method of disclosure, however, is not to be interpreted as reflecting an intention that the claimed subject matter requires more features than are expressly recited in each claim. Rather, claimed subject matter may lie in less than all features of a single foregoing disclosed embodiment.

In some embodiments, numbers describing the number of ingredients and attributes are used. It should be understood that such numbers used for the description of the embodiments use the modifier "about," "approximately," or "substantially" in some examples. Unless otherwise stated, "about," "approximately," or "substantially" indicates that the number is allowed to vary by ±20%. Correspondingly, in some embodiments, the numerical parameters used in the description and claims are approximate values, and the approximate values may be changed according to the required characteristics of individual embodiments. In some embodiments, the numerical parameters should consider the prescribed effective digits and adopt the method of general digit retention. Although the numerical ranges and parameters used to confirm the breadth of the range in some embodiments of the present disclosure are approximate values, in specific embodiments, settings of such numerical values are as accurate as possible within a feasible range.

Finally, it should be understood that the embodiments described in the present disclosure are only used to illustrate the principles of the embodiments of the present disclosure. Other variations may also fall within the scope of the present disclosure. Therefore, as an example and not a limitation, alternative configurations of the embodiments of the present disclosure may be regarded as consistent with the teaching of the present disclosure. Accordingly, the invention is not limited to the embodiments introduced and described in the present disclosure explicitly, but only by the scope of the appended set of claims.

## Claims

1. A computer-implemented method (200) for positron emission computed tomography (PET) image recnstruction implemented on a computing device having at least one processor and at least one storage device, the method comprising:
determining correction data (210) based on original PET data, wherein the correction data includes an attenuation map, scatter correction data, and random correction data;
determining reconstruction data (220) to be reconstructed based on the correction data, wherein the reconstruction data includes target PET data and the correction data, the target PET data is generated based on the original PET data, and the target PET data has a TOF histo-image format;
generating a first PET reconstruction image (710) based on the attenuation map and the target PET data;
generating a second PET reconstruction image (720) based on the scatter correction data and the target PET data;
generating a third PET reconstruction image (730) based on the random correction data and the target PET data; and
generating the PET reconstruction image (230) by processing the first, second, and third PET reconstruction images using an image fusion model, the image fusion model being a trained machine learning model (330).

2. The method of claim 1, wherein in the target PET data and the correction data, a coordinate of each data point is (x, y, z, φ, θ), x, y, z denote the coordinates of the data point in a three-dimensional coordinate system, φ denotes a projection angle, and θ denotes an accept angle.

3. The method of claim 1, wherein the original PET data includes PET data obtained based on a plurality of projection angles.

4. The method of claim 1, wherein:
the first PET reconstruction image is generated by processing the target PET data and the attenuation map using a first deep learning model,
the second PET reconstruction image is generated by processing the target PET data and the scatter correction data using the first deep learning model, and
the third PET reconstruction image is generated by processing the target PET data and the random correction data using the first deep learning model.

5. The method of claim 4, wherein the first deep learning model and the image fusion model are generated through joint training.

6. The method of claim 1, wherein the generating the PET reconstruction image by processing the first, second, and third PET reconstruction images using an image fusion model includes:
for each image of the first, second, and third PET reconstruction images, determining a quality assessment score of the image by processing the image using a quality assessment model, the quality assessment model being a trained machine learning model; and
generating the PET reconstruction image by processing the first, second, and third PET reconstruction images and the quality assessment scores using the image fusion model.

7. The method of claim 1, wherein the original PET data includes dynamic original PET data, the correction data includes dynamic correction data,
the method further comprises: correcting the dynamic original PET data based on the dynamic correction data; and converting corrected dynamic original PET data into corrected dynamic target PET data, wherein the corrected dynamic target PET data has a TOF histo-image format;
obtaining original parametric data by processing the corrected dynamic target PET data based on a pharmacokinetic model, wherein the original parametric data has a TOF histo-image format; and
generating a PET parametric image based on the original parametric data.

8. The method of claim 1, wherein the method further comprises:
generating a preliminary PET parametric image based on the reconstruction data;
generating the PET parametric image through an iterative process, wherein the iterative process includes a plurality of iterations;
an iteration of the plurality of iterations includes:
determining an iterative input function based on an initial image of the iteration, the initial image being generated based on a preliminary PET parametric image when the iteration is the first iteration, and the initial image being generated in a previous iteration when the iteration is an iteration other than the first iteration;
generating an iterative parametric image by performing a parametric analysis based on the iterative input function; and
generating an initial image of a next iteration based on the iterative parametric image.

9. A system (100) for positron emission computed tomography (PET) image reconstruction, comprising:
at least one storage device including a set of instructions; and
at least one processor in communication with the at least one storage device, wherein when executing the set of instructions, the at least one processor is configured to cause the system to perform operations including:
determining correction data based on original PET data, wherein the correction data includes an attenuation map, scatter correction data, and random correction data;
determining reconstruction data to be reconstructed based on the correction data, wherein the reconstruction data includes target PET data and the correction data, the target PET data is generated based on the original PET data, and the target PET data has a TOF histo-image format;
generating a first PET reconstruction image based on the attenuation map and the target PET data;
generating a second PET reconstruction image based on the scatter correction data and the target PET data;
generating a third PET reconstruction image based on the random correction data and the target PET data; and
generating the PET reconstruction image by processing the first, second, and third PET reconstruction images using an image fusion model, the image fusion model being a trained machine learning model.

10. The system of claim 9, wherein in the target PET data and the correction data, a coordinate of each data point is (x, y, z, φ, θ), x, y, z denote the coordinates of the data point in a three-dimensional coordinate system, φ denotes a projection angle, and θ denotes an accept angle.

11. The system of claim 9, wherein the original PET data includes PET data obtained based on a plurality of projection angles.

12. The system of claim 9, wherein:
the first PET reconstruction image is generated by processing the target PET data and the attenuation map using a first deep learning model,
the second PET reconstruction image is generated by processing the target PET data and the scatter correction data using the first deep learning model, and
the third PET reconstruction image is generated by processing the target PET data and the random correction data using the first deep learning model.

13. The system of claim 12, wherein the first deep learning model and the image fusion model are generated through joint training.

14. The system of claim 9, wherein the generating the PET reconstruction image by processing the first, second, and third PET reconstruction images using an image fusion model includes:
for each image of the first, second, and third PET reconstruction images, determining a quality assessment score of the image by processing the image using a quality assessment model, the quality assessment model being a trained machine learning model; and
generating the PET reconstruction image by processing the first, second, and third PET reconstruction images and the quality assessment scores using the image fusion model.

15. A non-transitory computer readable medium, comprising a set of instructions for positron emission computed tomography (PET) image reconstruction, wherein when executed by at least one processor, the set of instructions direct the at least one processor to effectuate a method, the method comprising:
determining correction data based on original PET data, wherein the correction data includes an attenuation map, scatter correction data, and random correction data;
determining reconstruction data to be reconstructed based on the correction data, wherein the reconstruction data includes target PET data and the correction data, the target PET data is generated based on the original PET data, and the target PET data has a TOF histo-image format;
generating a first PET reconstruction image based on the attenuation map and the target PET data;
generating a second PET reconstruction image based on the scatter correction data and the target PET data;
generating a third PET reconstruction image based on the random correction data and the target PET data; and
generating the PET reconstruction image by processing the first, second, and third PET reconstruction images using an image fusion model, the image fusion model being a trained machine learning model.

## Patentansprüche

1. Computerimplementiertes Verfahren (200) zur Bildrekonstruktion bei der Positronenemissionscomputertomographie (PET), das auf einer Computervorrichtung implementiert ist, die mindestens einen Prozessor und mindestens eine Speichervorrichtung aufweist, wobei das Verfahren Folgendes umfasst:
Bestimmen von Korrekturdaten (210) auf der Grundlage von ursprünglichen PET-Daten, wobei die Korrekturdaten eine Dämpfungskarte, Streukorrekturdaten und Zufallskorrekturdaten einschließen;
Bestimmen von Rekonstruktionsdaten (220), die auf Grundlage der Korrekturdaten rekonstruiert werden sollen,
wobei die Rekonstruktionsdaten Ziel-PET-Daten und die Korrekturdaten einschließen, die Ziel-PET-Daten auf der Grundlage der ursprünglichen PET-Daten erzeugt werden und die Ziel-PET-Daten ein TOF-Histo-Bildformat aufweisen;
Erzeugen eines ersten PET-Rekonstruktionsbildes (710) auf der Grundlage der Dämpfungskarte und der Ziel-PET-Daten;
Erzeugen eines zweiten PET-Rekonstruktionsbildes (720) auf der Grundlage der Streukorrekturdaten und der Ziel-PET-Daten;
Erzeugen eines dritten PET-Rekonstruktionsbildes (730) auf der Grundlage der Zufallskorrekturdaten und der Ziel-PET-Daten; und
Erzeugen des PET-Rekonstruktionsbildes (230), indem das erste, zweite und dritte PET-Rekonstruktionsbild unter Verwendung eines Bildfusionsmodells verarbeitet werden, wobei es sich bei dem Bildfusionsmodell um ein trainiertes Machine-Learning-Modell (330) handelt.

2. Verfahren nach Anspruch 1, wobei in den Ziel-PET-Daten und den Korrekturdaten eine Koordinate jedes Datenpunkts (x, y, z, *φ*, θ) ist, x, y, z die Koordinaten des Datenpunkts in einem dreidimensionalen Koordinatensystem bezeichnen, *φ* einen Projektionswinkel bezeichnet und θ einen Akzeptanzwinkel bezeichnet.

3. Verfahren nach Anspruch 1, wobei die ursprünglichen PET-Daten PET-Daten einschließen, die auf der Grundlage einer Vielzahl von Projektionswinkeln erhalten wurden.

4. Verfahren nach Anspruch 1, wobei:
das erste PET-Rekonstruktionsbild durch die Verarbeitung der Ziel-PET-Daten und der Dämpfungskarte unter Verwendung eines ersten Deep-Learning-Modells erzeugt wird,
das zweite PET-Rekonstruktionsbild durch die Verarbeitung der Ziel-PET-Daten und der Streukorrekturdaten unter Verwendung des ersten Deep-Learning-Modells erzeugt wird, und
das dritte PET-Rekonstruktionsbild durch die Verarbeitung der Ziel-PET-Daten und der zufälligen Korrekturdaten unter Verwendung des ersten Deep-Learning-Modells erzeugt wird.

5. Verfahren nach Anspruch 4, wobei das erste Deep-Learning-Modell und das Bildfusionsmodell durch gemeinsames Training erzeugt werden.

6. Verfahren nach Anspruch 1, wobei das Erzeugen des PET-Rekonstruktionsbildes durch Verarbeitung des ersten, zweiten und dritten PET-Rekonstruktionsbildes unter Verwendung eines Bildfusionsmodells Folgendes einschließt:
Bestimmen, für jedes Bild des ersten, zweiten und dritten PET-Rekonstruktionsbildes, eines Qualitätsbewertungswerts des Bildes durch Verarbeitung des Bildes unter Verwendung eines Qualitätsbewertungsmodells, wobei es sich bei dem Qualitätsbewertungsmodell um ein trainiertes Machine-Learning-Modell handelt; und
Erzeugen des PET-Rekonstruktionsbildes durch die Verarbeitung des ersten, zweiten und dritten PET-Rekonstruktionsbildes sowie der Qualitätsbewertungswerte unter Verwendung des Bildfusionsmodells.

7. Verfahren nach Anspruch 1, wobei die ursprünglichen PET-Daten dynamische ursprüngliche PET-Daten einschließen, die Korrekturdaten dynamische Korrekturdaten einschließen,
das Verfahren ferner umfasst: Korrigieren der dynamischen ursprünglichen PET-Daten auf der Grundlage der dynamischen Korrekturdaten; und Umwandeln der korrigierten dynamischen ursprünglichen PET-Daten in korrigierte dynamische Ziel-PET-Daten, wobei die korrigierten dynamischen Ziel-PET-Daten ein TOF-Histo-Bildformat aufweisen;
Erhalten der ursprünglichen parametrischen Daten durch Verarbeitung der korrigierten dynamischen Ziel-PET-Daten auf der Grundlage eines pharmakokinetischen Modells, wobei die ursprünglichen parametrischen Daten ein TOF-Histo-Bildformat aufweisen; und
Erzeugen eines parametrischen PET-Bildes auf der Grundlage der ursprünglichen parametrischen Daten.

8. Verfahren nach Anspruch 1, wobei das Verfahren ferner Folgendes umfasst:
Erzeugen eines vorläufigen parametrischen PET-Bildes auf der Grundlage der Rekonstruktionsdaten;
Erzeugen des parametrischen PET-Bildes durch einen iterativen Prozess, wobei der iterative Prozess eine Vielzahl von Iterationen einschließt;
wobei eine Iteration der Vielzahl von Iterationen einschließt:
Bestimmen einer iterativen Eingangsfunktion auf der Grundlage eines Anfangsbildes der Iteration, wobei das Anfangsbild auf der Grundlage eines vorläufigen parametrischen PET-Bildes erzeugt wird, wenn es sich um die erste Iteration handelt, und das Anfangsbild in einer vorherigen Iteration erzeugt wird, wenn es sich um eine andere Iteration als die erste handelt;
Erzeugen eines iterativen parametrischen Bildes durch Durchführung einer parametrischen Analyse auf der Grundlage der iterativen Eingangsfunktion; und
Erzeugen eines Anfangsbildes einer nächsten Iteration auf der Grundlage des iterativen parametrischen Bildes.

9. System (100) zur Bildrekonstruktion bei der Positronenemissionscomputertomographie (PET), umfassend:
mindestens eine Speichervorrichtung, die einen Satz von Anweisungen einschließt; und
mindestens einen Prozessor, der in Kommunikation mit der mindestens einen Speichervorrichtung steht, wobei der mindestens eine Prozessor so konfiguriert ist, dass er, wenn er den Satz Anweisungen ausführt, das System dazu veranlasst, Operationen durchzuführen, die Folgendes einschließen:
Bestimmen von Korrekturdaten auf der Grundlage von ursprünglichen PET-Daten, wobei die Korrekturdaten eine Dämpfungskarte, Streukorrekturdaten und Zufallskorrekturdaten einschließen;
Bestimmen von zu rekonstruierenden Rekonstruktionsdaten auf der Grundlage der Korrekturdaten, wobei die Rekonstruktionsdaten Ziel-PET-Daten und die Korrekturdaten einschließen, die Ziel-PET-Daten auf der Grundlage der ursprünglichen PET-Daten erzeugt werden und die Ziel-PET-Daten ein TOF-Histo-Bildformat aufweisen;
Erzeugen eines ersten PET-Rekonstruktionsbildes auf der Grundlage der Dämpfungskarte und der Ziel-PET-Daten;
Erzeugen eines zweiten PET-Rekonstruktionsbildes auf der Grundlage der Streukorrekturdaten und der Ziel-PET-Daten;
Erzeugen eines dritten PET-Rekonstruktionsbildes auf der Grundlage der Zufallskorrekturdaten und der Ziel-PET-Daten; und
Erzeugen des PET-Rekonstruktionsbildes, indem das erste, zweite und dritte PET-Rekonstruktionsbild unter Verwendung eines Bildfusionsmodells verarbeitet werden, wobei es sich bei dem Bildfusionsmodell um ein trainiertes Machine-Learning-Modell handelt.

10. System nach Anspruch 9, wobei in den Ziel-PET-Daten und den Korrekturdaten eine Koordinate jedes Datenpunkts (x, y, z, *φ*, θ) ist, x, y, z die Koordinaten des Datenpunkts in einem dreidimensionalen Koordinatensystem bezeichnen, *φ* einen Projektionswinkel bezeichnet und θ einen Akzeptanzwinkel bezeichnet.

11. System nach Anspruch 9, wobei die ursprünglichen PET-Daten PET-Daten einschließen, die auf der Grundlage einer Vielzahl von Projektionswinkeln erhalten wurden.

12. System nach Anspruch 9, wobei
das erste PET-Rekonstruktionsbild durch die Verarbeitung der Ziel-PET-Daten und der Dämpfungskarte unter Verwendung eines ersten Deep-Learning-Modells erzeugt wird,
das zweite PET-Rekonstruktionsbild durch die Verarbeitung der Ziel-PET-Daten und der Streukorrekturdaten unter Verwendung des ersten Deep-Learning-Modells erzeugt wird, und
das dritte PET-Rekonstruktionsbild durch die Verarbeitung der Ziel-PET-Daten und der zufälligen Korrekturdaten unter Verwendung des ersten Deep-Learning-Modells erzeugt wird.

13. System nach Anspruch 12, wobei das erste Deep-Learning-Modell und das Bildfusionsmodell durch gemeinsames Training erzeugt werden.

14. System nach Anspruch 9, wobei das Erzeugen des PET-Rekonstruktionsbildes durch Verarbeitung des ersten, zweiten und dritten PET-Rekonstruktionsbildes unter Verwendung eines Bildfusionsmodells Folgendes einschließt:
Bestimmen, für jedes Bild des ersten, zweiten und dritten PET-Rekonstruktionsbildes, eines Qualitätsbewertungswerts des Bildes durch Verarbeitung des Bildes unter Verwendung eines Qualitätsbewertungsmodells, wobei es sich bei dem Qualitätsbewertungsmodell um ein trainiertes Machine-Learning-Modell handelt; und
Erzeugen des PET-Rekonstruktionsbildes durch die Verarbeitung des ersten, zweiten und dritten PET-Rekonstruktionsbildes sowie der Qualitätsbewertungswerte unter Verwendung des Bildfusionsmodells.

15. Nichtflüchtiges, computerlesbares Medium, umfassend einen Satz von Anweisungen zur Bildrekonstruktion bei der Positronenemissionscomputertomographie (PET), wobei der Satz von Anweisungen, wenn er von mindestens einem Prozessor ausgeführt wird, den mindestens einen Prozessor anweist, ein Verfahren durchzuführen, wobei das Verfahren umfasst:
Bestimmen von Korrekturdaten auf der Grundlage von ursprünglichen PET-Daten, wobei die Korrekturdaten eine Dämpfungskarte, Streukorrekturdaten und Zufallskorrekturdaten einschließen;
Bestimmen von zu rekonstruierenden Rekonstruktionsdaten auf der Grundlage der Korrekturdaten, wobei die Rekonstruktionsdaten Ziel-PET-Daten und die Korrekturdaten einschließen, die Ziel-PET-Daten auf der Grundlage der ursprünglichen PET-Daten erzeugt werden und die Ziel-PET-Daten ein TOF-Histo-Bildformat aufweisen;
Erzeugen eines ersten PET-Rekonstruktionsbildes auf der Grundlage der Dämpfungskarte und der Ziel-PET-Daten;
Erzeugen eines zweiten PET-Rekonstruktionsbildes auf der Grundlage der Streukorrekturdaten und der Ziel-PET-Daten;
Erzeugen eines dritten PET-Rekonstruktionsbildes auf der Grundlage der Zufallskorrekturdaten und der Ziel-PET-Daten; und
Erzeugen des PET-Rekonstruktionsbildes, indem das erste, zweite und dritte PET-Rekonstruktionsbild unter Verwendung eines Bildfusionsmodells verarbeitet werden, wobei es sich bei dem Bildfusionsmodell um ein trainiertes Machine-Learning-Modell handelt.

## Revendications

1. Procédé mis en œuvre par ordinateur (200) de reconstruction d'image de tomodensitométrie par émission de positrons (PET), le procédé étant mis en œuvre sur un dispositif informatique présentant au moins un processeur et au moins un dispositif de stockage, le procédé comprenant les étapes consistant à :
déterminer des données de correction (210) sur la base de données de PET d'origine, dans lequel les données de correction incluent une carte d'atténuation, des données de correction de diffusion et des données de correction aléatoires ;
déterminer des données de reconstruction (220) à reconstruire sur la base des données de correction,
dans lequel les données de reconstruction incluent des données de PET cibles et les données de correction, les données de PET cibles sont générées à partir des données de PET d'origine et les données de PET cibles présentent un format d'histo-image TOF ;
générer une première image de reconstruction de PET (710) sur la base de la carte d'atténuation et des données de PET cibles ;
générer une deuxième image de reconstruction de PET (720) sur la base des données de correction de diffusion et des données de PET cibles ;
générer une troisième image de reconstruction de PET (730) sur la base des données de correction aléatoires et des données de PET cibles ; et
générer l'image de reconstruction de PET (230) en traitant les première, deuxième et troisième images de reconstruction de PET à l'aide d'un modèle de fusion d'images, le modèle de fusion d'images étant un modèle d'apprentissage automatique entraîné (330).

2. Procédé selon la revendication 1, dans lequel dans les données de PET cibles et les données de correction, les coordonnées de chaque point de données sont (x, y, z, *φ*, θ), x, y, z désignent les coordonnées du point de données dans un système de coordonnées tridimensionnel, *φ* désigne un angle de projection et θ désigne un angle d'acceptation.

3. Procédé selon la revendication 1, dans lequel les données de PET d'origine incluent des données de PET obtenues sur la base d'une pluralité d'angles de projection.

4. Procédé selon la revendication 1, dans lequel :
la première image de reconstruction de PET est générée en traitant les données de PET cibles et la carte d'atténuation à l'aide d'un premier modèle d'apprentissage profond,
la deuxième image de reconstruction de PET est générée en traitant les données de PET cibles et les données de correction de diffusion à l'aide du premier modèle d'apprentissage profond, et
la troisième image de reconstruction de PET est générée en traitant les données de PET cibles et les données de correction aléatoires à l'aide du premier modèle d'apprentissage profond.

5. Procédé selon la revendication 4, dans lequel le premier modèle d'apprentissage profond et le modèle de fusion d'images sont générés par un entraînement conjoint.

6. Procédé selon la revendication 1, dans lequel la génération de l'image de reconstruction de PET par traitement des première, deuxième et troisième images de reconstruction de PET à l'aide d'un modèle de fusion d'images inclut les étapes consistant à :
pour chaque image des première, deuxième et troisième images de reconstruction de PET, déterminer un score d'évaluation de qualité de l'image en traitant l'image à l'aide d'un modèle d'évaluation de la qualité, le modèle d'évaluation de qualité étant un modèle d'apprentissage automatique entraîné ; et
générer l'image de reconstruction de PET en traitant les première, deuxième et troisième images de reconstruction de PET et les scores d'évaluation de qualité à l'aide du modèle de fusion d'images.

7. Procédé selon la revendication 1, dans lequel les données de PET d'origine incluent des données de PET d'origine dynamiques, les données de correction incluent des données de correction dynamiques,
le procédé comprend en outre les étapes consistant à : corriger les données de PET d'origine dynamiques sur la base des données de correction dynamiques ; et convertir des données de PET d'origine dynamiques corrigées en données de PET cibles dynamiques corrigées, dans lequel les données de PET cibles dynamiques corrigées présentent un format d'histo-image TOF ;
obtenir des données paramétriques d'origine par traitement des données de PET dynamiques cibles corrigées sur la base d'un modèle pharmacocinétique, dans lequel les données paramétriques d'origine présentent un format d'histo-image TOF ; et
générer une image paramétrique de PET sur la base des données paramétriques d'origine.

8. Procédé selon la revendication 1, dans lequel le procédé comprend en outre les étapes consistant à :
générer une image paramétrique de PET préliminaire sur la base des données de reconstruction ;
générer l'image paramétrique de PET par l'intermédiaire d'un processus itératif, dans lequel le processus itératif inclut une pluralité d'itérations ;
une itération de la pluralité d'itérations inclut les étapes consistant à :
déterminer une fonction d'entrée itérative sur la base d'une image initiale de l'itération, l'image initiale étant générée sur la base d'une image paramétrique de PET préliminaire lorsque l'itération est la première itération, et l'image initiale étant générée lors d'une itération précédente lorsque l'itération est une itération autre que la première itération ;
générer une image paramétrique itérative en effectuant une analyse paramétrique sur la base de la fonction d'entrée itérative ; et
générer une image initiale d'une itération suivante sur la base de l'image paramétrique itérative.

9. Système (100) de reconstruction d'image de tomodensitométrie par émission de positrons (PET), comprenant :
au moins un dispositif de stockage incluant un ensemble d'instructions ; et
au moins un processeur en communication avec le au moins un dispositif de stockage, dans lequel, lors de l'exécution de l'ensemble d'instructions, le au moins un processeur est configuré pour amener le système à effectuer des opérations incluant :
déterminer des données de correction sur la base de données de PET d'origine, dans lequel les données de correction incluent une carte d'atténuation, des données de correction de diffusion et des données de correction aléatoires ;
déterminer des données de reconstruction à reconstruire sur la base des données de correction, dans lequel les données de reconstruction incluent des données de PET cibles et les données de correction, les données de PET cibles sont générées sur la base des données de PET d'origine et les données de PET cibles présentent un format d'histo-image TOF ;
générer une première image de reconstruction de PET sur la base de la carte d'atténuation et des données de PET cibles ;
générer une deuxième image de reconstruction de PET sur la base des données de correction de la diffusion et les données de PET cibles ;
générer une troisième image de reconstruction de PET sur la base des données de correction aléatoires et des données de PET cibles ; et
générer l'image de reconstruction de PET en traitant les première, deuxième et troisième images de reconstruction de PET à l'aide d'un modèle de fusion d'images, le modèle de fusion d'images étant un modèle d'apprentissage automatique entraîné.

10. Système selon la revendication 9, dans lequel dans les données de PET cibles et les données de correction, les coordonnées de chaque point de données sont (x, y, z, *φ*, θ), x, y, z désignent les coordonnées du point de données dans un système de coordonnées tridimensionnel, *φ* désigne un angle de projection et θ désigne un angle d'acceptation.

11. Système selon la revendication 9, dans lequel les données de PET d'origine incluent des données de PET obtenues sur la base d'une pluralité d'angles de projection.

12. Système selon la revendication 9, dans lequel :
la première image de reconstruction de PET est générée en traitant les données de PET cibles et la carte d'atténuation à l'aide d'un premier modèle d'apprentissage profond,
la deuxième image de reconstruction de PET est générée en traitant les données de PET cibles et les données de correction de diffusion à l'aide du premier modèle d'apprentissage profond, et
la troisième image de reconstruction de PET est générée en traitant les données de PET cibles et les données de correction aléatoires à l'aide du premier modèle d'apprentissage profond.

13. Système selon la revendication 12, dans lequel le premier modèle d'apprentissage profond et le modèle de fusion d'images sont générés par un entraînement conjoint.

14. Système selon la revendication 9, dans lequel la génération de l'image de reconstruction de PET par traitement des première, deuxième et troisième images de reconstruction de PET à l'aide d'un modèle de fusion d'images inclut les étapes consistant à :
pour chaque image des première, deuxième et troisième images de reconstruction de PET, déterminer un score d'évaluation de qualité de l'image en traitant l'image à l'aide d'un modèle d'évaluation de la qualité, le modèle d'évaluation de qualité étant un modèle d'apprentissage automatique entraîné ; et
générer l'image de reconstruction de PET en traitant les première, deuxième et troisième images de reconstruction de PET et les scores d'évaluation de qualité à l'aide du modèle de fusion d'images.

15. Support non transitoire lisible par ordinateur, comprenant un ensemble d'instructions pour une reconstruction d'image de tomodensitométrie par émission de positrons (PET), dans lequel lorsqu'il est exécuté par au moins un processeur, l'ensemble d'instructions ordonne au au moins un processeur de mettre en œuvre un procédé, le procédé comprenant les étapes consistant à :
déterminer des données de correction sur la base de données de PET d'origine, dans lequel les données de correction incluent une carte d'atténuation, des données de correction de diffusion et des données de correction aléatoires ;
déterminer des données de reconstruction à reconstruire sur la base des données de correction, dans lequel les données de reconstruction incluent des données de PET cibles et les données de correction, les données de PET cibles sont générées sur la base des données de PET d'origine et les données de PET cibles présentent un format d'histo-image TOF ;
générer une première image de reconstruction de PET sur la base de la carte d'atténuation et des données de PET cibles ;
générer une deuxième image de reconstruction de PET sur la base des données de correction de la diffusion et les données de PET cibles ;
générer une troisième image de reconstruction de PET sur la base des données de correction aléatoires et des données de PET cibles ; et
générer l'image de reconstruction de PET en traitant les première, deuxième et troisième images de reconstruction de PET à l'aide d'un modèle de fusion d'images, le modèle de fusion d'images étant un modèle d'apprentissage automatique entraîné.
